(19) Europäisches Patentamt
European Patent Office
Office européen des brevets

(11) **EP 4 761 397 A1**

(12) # EUROPEAN PATENT APPLICATION
published in accordance with Art. 153(4) EPC

(43) Date of publication:
**17.06.2026 Bulletin 2026/25**

(21) Application number: **24852427.4**

(22) Date of filing: **12.08.2024**

(51) International Patent Classification (IPC):
*H04W 64/00* (2009.01)      *H04W 24/08* (2009.01)
*H04L 5/00* (2006.01)        *G01S 5/00* (2006.01)
*H04W 4/029* (2018.01)

(52) Cooperative Patent Classification (CPC):
G01S 5/00; H04L 5/00; H04W 4/029; H04W 24/08;
H04W 64/00

(86) International application number:
**PCT/KR2024/011987**

(87) International publication number:
**WO 2025/034074 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023   US 202363532053 P**

(71) Applicant: **LG Electronics Inc.**
**Yeongdeungpo-gu**
**Seoul 07336 (KR)**

(72) Inventors:
• **SHIM, Jaenam**
  **Seoul 06772 (KR)**
• **HWANG, Seunggye**
  **Seoul 06772 (KR)**
• **KIM, Kijun**
  **Seoul 06772 (KR)**
• **KO, Hyunsoo**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR PERFORMING MEASUREMENT BY TERMINAL IN WIRELESS COMMUNICATION SYSTEM**

(57)     Disclosed are a method and a device for performing measurement by a terminal in a wireless communication system according to various embodiments. Disclosed are a method and a device for same, the method comprising the steps of: receiving configuration information including information on a plurality of positioning reference signal (PRS) resource sets and first priority information between the plurality of PRS resource sets; and performing measurement for positioning in a PRS resource set having a high priority among the plurality of PRS resource sets on the basis of the configuration information.

FIG. 14

S141
Receive configuration information including information on plurality of PRS resource sets and first priority information

S143
Select/determine PRS resource set with higher priority among plurality of PRS resource sets based on configuration information

S145
Perform measurement for positioning in one or more PRS resource sets

**Description**

**TECHNICAL FIELD**

The present disclosure relates to a method of performing positioning of a user equipment (UE) in a wireless communication system and apparatus therefor.

**BACKGROUND**

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

**DISCLOSURE**

**Technical Problem**

One object of the present disclosure is to provide a method of performing measurement for positioning more accurately and efficiently.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

**Technical Solution**

According to an aspect, a method of performing measurement by a user equipment (UE) in a wireless communication system may include receiving configuration information including information on a plurality of positioning reference signal (PRS) resource sets and first priority information between the plurality of PRS resource sets, and performing measurement for positioning in a PRS resource set having a higher priority among the plurality of PRS resource sets based on the configuration information, wherein the configuration information may further include information on PRS resource pairs included in at least one PRS resource set for carrier phase based positioning (CPP) measurement and second priority information between the PRS resource pairs.

Based on the measurement for the positioning being CPP measurement, the UE may determine that a highest priority is configured for at least one PRS resource set among the plurality of PRS resource sets, regardless of the first priority information.

Based on the measurement for the positioning being CPP measurement, the UE may determine that the same specific priority is configured for the at least one PRS resource set regardless of the first priority information.

The configuration information may further include information on a time window related to CPP measurement.

Based on the measurement for the positioning being CPP measurement, the UE may consider that a highest priority is configured for PRS resource sets in which the PRS is received within the time window among the plurality of PRS resource sets.

The measurement for the positioning may be CPP measurement, and the CPP measurement may be performed only for one PRS resource pair among the plurality of PRS resource pairs determined based on the second priority information.

The method may further include reporting measurement information on a result of performing the measurement, and based on measurement for the positioning being CPP measurement, the measurement information includes information on a phase difference between PRSs received from the one PRS resource pair.

Based on the measurement for the positioning being not CPP measurement, the measurement may be performed in the PRS resource set having a highest priority among the plurality of PRS resource sets based on the first priority information.

Each of the plurality of PRS resource pairs may include two PRS resources related with different transmission and reception points (TRPs).

The configuration information may be transmitted to a network through a positioning assistance data transfer procedure.

According to another aspect, a computer-readable recording medium recording a program for performing the method of performing the method of performing CPP measurement by the UE described above may be provided.

According to another aspect, a UE for performing the measurement described above may be provided.

According to another aspect, a processing device for controlling a UE for performing the measurement described above may be provided.

According to another aspect, a method of transmitting configuration information for carrier phase based positioning (CPP) measurement by a network in a wireless communication system may include transmitting configuration information including information on a plurality of positioning reference signal (PRS) resource sets and first priority information between the plurality of PRS resource sets, and receiving measurement information for measurement performed on a predetermined PRS resource set among the plurality of PRS resource sets based on the configuration information, wherein the configuration information may further include information on PRS resource pairs included in at least one PRS resource set for CPP measurement and second priority information between the PRS resource pairs.

According to another aspect, a network for transmitting configuration information for the carrier phase based positioning (CPP) measurement described above may be provided.

**Advantageous Effects**

According to an embodiment of the present disclosure, measurement for positioning in a wireless communication system may be performed accurately and efficiently.

Effects to be achieved by embodiment(s) are not limited to what has been particularly described hereinabove and other effects not mentioned herein will be more clearly understood by persons skilled in the art to which embodiment(s) pertain from the following detailed description.

**BRIEF DESCRIPTION OF THE DRAWINGS**

The accompanying drawings, which are included to provide a further understanding of the disclosure and are incorporated in and constitute a part of this application, illustrate embodiments of the disclosure and together with the description serve to explain the principle of the disclosure.

FIG. 1 illustrates the structure of an LTE system to which embodiment(s) are applicable.
FIG. 2 illustrates the structure of an NR system to which embodiment(s) are applicable.
FIG. 3 illustrates the structure of an NR radio frame to which embodiment(s) are applicable.
FIG. 4 illustrates the slot structure of an NR frame to which embodiment(s) are applicable.
FIG. 5 is a diagram illustrating physical channels and a signal transmission method using the physical channels, which may be used in the embodiment;
FIG. 6 is a flowchart showing an example of a UL BM procedure using a SRS.
FIG. 7 is a diagram illustrating a positioning protocol configuration for positioning a user equipment (UE), to which various embodiments are applicable.
FIG. 8 illustrates an exemplary system architecture for measuring positioning of a UE to which various embodiments are applicable.
FIG. 9 illustrates an implementation example of a network for UE positioning.
FIG. 10 is a diagram illustrating protocol layers for supporting LTE positioning protocol (LPP) message transmission, to which various embodiments are applicable.
FIG. 11 is a diagram illustrating protocol layers for supporting NR positioning protocol a (NRPPa) protocol data unit (PDU) transmission, to which various embodiments are applicable.
FIG. 12 is a diagram illustrating an observed time difference of arrival (OTDOA) positioning method, to which various embodiments are applicable.
FIG. 13 is a diagram illustrating various scenarios related to wireless sensing through ISAC/JCAS.
FIG. 14 is a diagram for explaining a method of performing measurement for positioning by a UE.
FIG. 15 is a diagram for explaining a method of providing configuration information for measurement for positioning to a UE by a network.
FIG. 16 illustrates a communication system applied to the present disclosure;

FIG. 17 illustrates wireless devices applicable to the present disclosure.

FIG. 18 illustrates another example of a wireless device to which the present disclosure is applied.

## DETAILED DESCRIPTION

Various embodiments are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

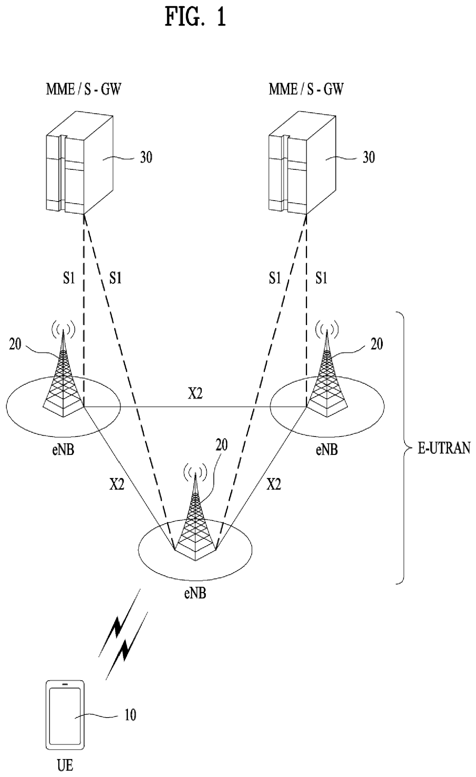

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

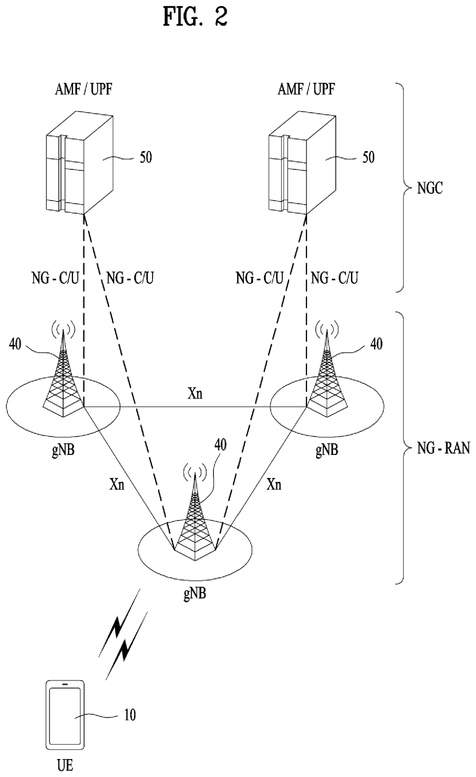

FIG. 2 illustrates the structure of a NR system.

Referring to FIG. 2, a next generation radio access network (NG-RAN) may include a next generation Node B (gNB) and/or an eNB, which provides user-plane and control-plane protocol termination to a UE. In FIG. 2, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

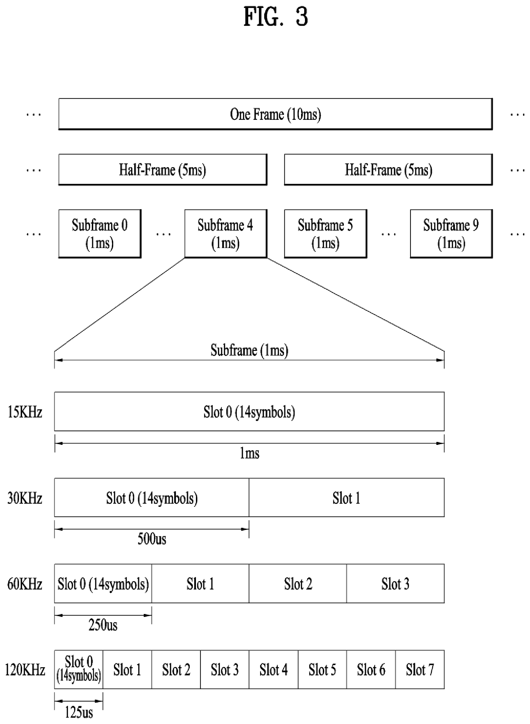

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description). In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

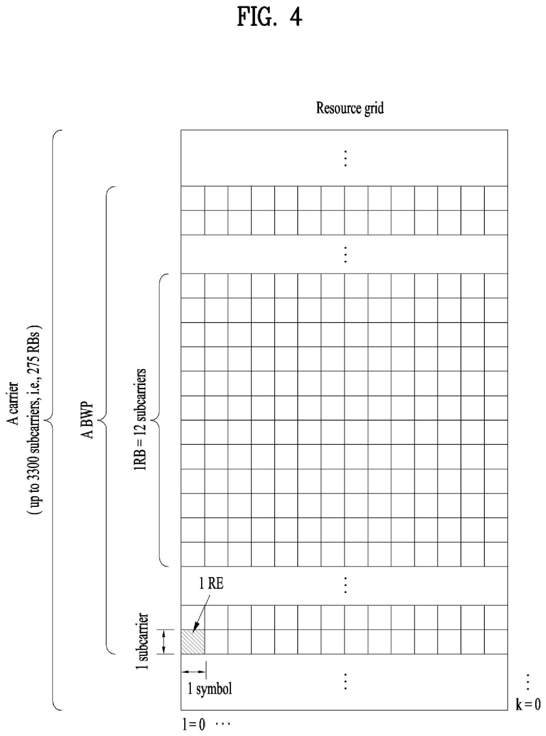

FIG. 4 illustrates the slot structure of a NR frame.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

## Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signalling, etc.). The BS may instruct the UE to switch to another configured DL/UL BWP (through L1 signaling, MAC CE or RRC signalling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

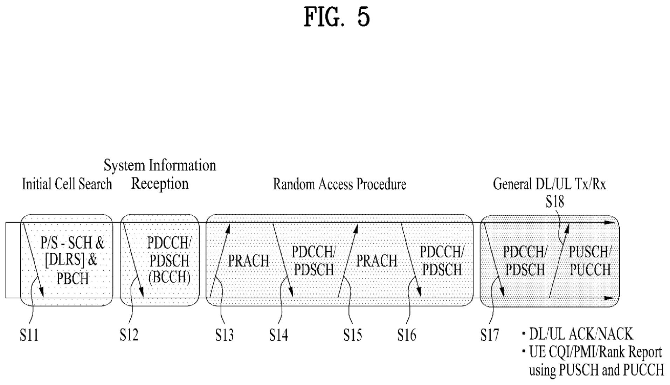

FIG. 5 is a diagram illustrating physical channels and a signal transmission method using the physical channels, which may be used in various embodiments.

Referring to FIG. 5, when powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

**Sounding Procedure**

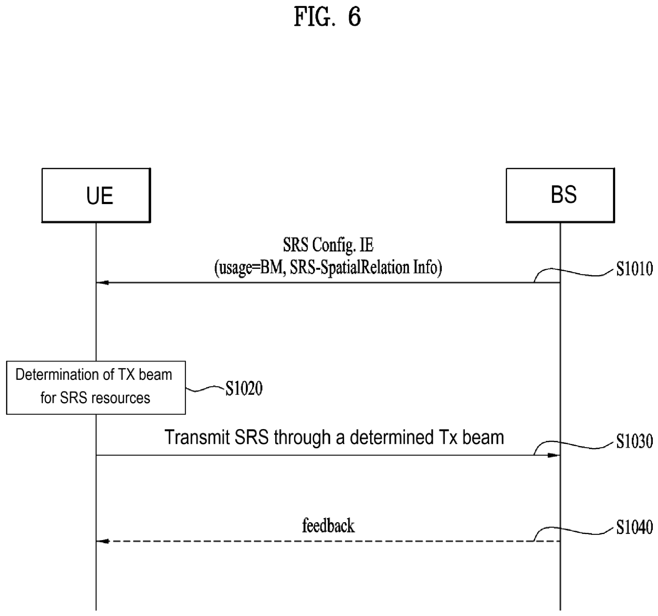

FIG. 6 is a flowchart showing an example of a UL BM procedure using a SRS.

Referring to FIG. 6, in UL BM, beam reciprocity (or beam correspondence) between a Tx beam and a Rx beam may or may not be established according to UE implementation. When reciprocity between the Tx beam and the Rx beam is established in both the BS and the UE, a UL beam pair may be aligned through a DL beam pair. However, when reciprocity between the Tx beam and the Rx beam is not established in either of the BS and the UE, a UL beam pair determination process may be required separately from DL beam pair determination.

The UE may receive RRC signaling (e.g., SRS-Config IE) including a (higher layer parameter) usage parameter configured to 'beam management' (S1010).

The UE may determine the Tx beam for a SRS resource to be transmitted based on SRS-SpatialRelation Info included in the SRS-Config IE (S1020). Here, the SRS-SpatialRelation Info may be configured for each SRS resource, and may indicate whether to apply the same beam as the beam used in SSB, CSI-RS, or SRS for each SRS resource. In addition, SRS-SpatialRelationInfo may or may not be configured in each SRS resource. When the SRS-SpatialRelationInfo is configured in the SRS resource, the same beam as the beam used in SSB, CSI-RS or SRS may be applied and transmitted. However, when SRS-SpatialRelationInfo is not configured to the SRS resource, the UE may arbitrarily determine a Tx beam and may transmit the SRS through the determined Tx beam (S1030).

In more detail, for P-SRS in which 'SRS-ResourceConfigType' is configured 'periodically':

i) When the SRS-SpatialRelationInfo is configured to 'SSB/PBCH', the UE may apply the same spatial domain transmission filter (or generated from the corresponding filter) as a spatial domain Rx filter used to receive a SSB/PBCH and may transmit the corresponding SRS resource; or
ii) When the SRS-SpatialRelationInfo is configured to a 'CSI-RS', the UE may apply the same spatial domain transmission filter as a filter used to receive a periodic CSI-RS or a SP CSI-RS and may transmit a SRS resource; or
iii) When the SRS-SpatialRelationInfo is configured to a 'SRS', the UE may apply the same spatial domain transmission filter as a filter used to transmit a periodic SRS and may transmit the corresponding SRS resource.

Even when the 'SRS-ResourceConfigType' is configured to a 'SP-SRS' or an 'AP-SRS', beam determination and transmission operations may be applied similar to the above.

- Additionally, the UE may or may not receive feedback to the SRS from the BS as in the following three cases (S1040)

  i) When Spatial_Relation_Info is configured for all SRS resources in an SRS resource set, the UE may transmit an SRS in a beam indicated by the BS. For example, when Spatial_Relation_Info all indicate the same SSB, CRI, or SRI, the UE may repeatedly transmit the SRS in the same beam.
  ii) Spatial_Relation_Info may not be configured for all SRS resources in the SRS resource set. In this case, the UE may freely perform transmission while changing the SRS beam.
  iii) Spatial_Relation_Info may be configured only for some SRS resources in the SRS resource set. In this case, for the configured SRS resource, the SRS may be transmitted in the indicated beam, and for the SRS resource for which Spatial_Relation_Info is not configured, the UE may arbitrarily apply the Tx beam to perform transmission.

A DCI format 0_0 or 0_1 may be used for uplink scheduling, and in particular, the DCI format 0_1 may include the following information:

- Identifier for DCI formats, UL/SUL(supplementary uplink) indicator (UL/SUL indicator), Bandwidth part indicator, Frequency domain resource assignment, Time domain resource assignment, Frequency hopping flag, MCS (Modulation and coding scheme), SRI (SRS resource indicator), Precoding information and number of layers, Antenna port(s), SRS request), DMRS sequence initialization, and UL-SCH (Uplink Shared Channel) indicator (UL-SCH indicator).
- In particular, SRS resources configured in an SRS resource set related to the higher layer parameter 'usage' may be indicated by an SRS resource indicator field. In addition, 'spatialRelationInfo' may be configured for each SRS resource, and the value may be one of {CRI, SSB, and SRI}.

When detecting a PDCCH including the DCI format 0_0 or 0_1, the UE may transmit the corresponding PUSCH according to indication by the corresponding DCI.
Two transmission schemes of codebook-based transmission and non-codebook-based transmission are supported for PUSCH transmission:

i) When the higher layer parameter 'txConfig' is set to the 'codebook', the UE is configured with codebook-based transmission. On the other hand, when the higher layer parameter 'txConfig' is set to the 'nonCodebook', the UE is configured with non-codebook based transmission. When the higher layer parameter 'txConfig' is not set, the UE may not expect to be scheduled by the DCI format 0_1. When the PUSCH is scheduled according to the DCI format 0_0, PUSCH transmission may be based on a single antenna port.
In the case of codebook-based transmission, the PUSCH may be scheduled by DCI format 0_0, DCI format 0_1, or semi-statically. When the PUSCH is scheduled by the DCI format 0_1, the UE may determine a PUSCH transmission precoder based on SRI, TPMI (Transmit Precoding Matrix Indicator), and transmission rank from DCI, as given by an SRS resource indicator field, Precoding information, and number of layers field. The TPMI may be used to indicate a precoder to be applied across an antenna port, and may correspond to an SRS resource selected by the SRI when multiple SRS resources are configured. Alternatively, when a single SRS resource is configured, the TPMI may be used to indicate a precoder to be applied across the antenna port, and may correspond to the single SRS resource. A transmission precoder may be selected from an uplink codebook having the same number of antenna ports as the higher layer parameter 'nrofSRS-Ports'. When a higher layer in which the UE is set to the 'codebook' is configured with the parameter 'txConfig', the UE may be configured with at least one SRS resource. The SRI indicated in slot n may be related to the most recent transmission of the SRS resource identified by the SRI, and here, the SRS resource may precede the PDCCH carrying the SRI (i.e., slot n).
ii) In the case of non-codebook-based transmission, the PUSCH may be scheduled by DCI format 0_0, DCI format 0_1, or semi-statically. When multiple SRS resources are configured, the UE may determine a PUSCH precoder and a transmission rank based on a wideband SRI, and here, the SRI may be given by an SRS resource indicator in the DCI or by a higher layer parameter 'srs-ResourceIndicator'. The UE may use one or multiple SRS resources for SRS transmission, and here, the number of SRS resources may be configured for simultaneous transmission within the same RB based on UE capabilities. Only one SRS port may be configured for each SRS resource. Only one SRS resource may be configured to the higher layer parameter 'usage' set to the 'nonCodebook'. The maximum number of SRS resources to be configured for non-codebook-based uplink transmission may be 4. The SRI indicated in slot n may be related to the most recent transmission of the SRS resource identified by the SRI, and here, SRS transmission may precede the PDCCH carrying the SRI (i.e., slot n).

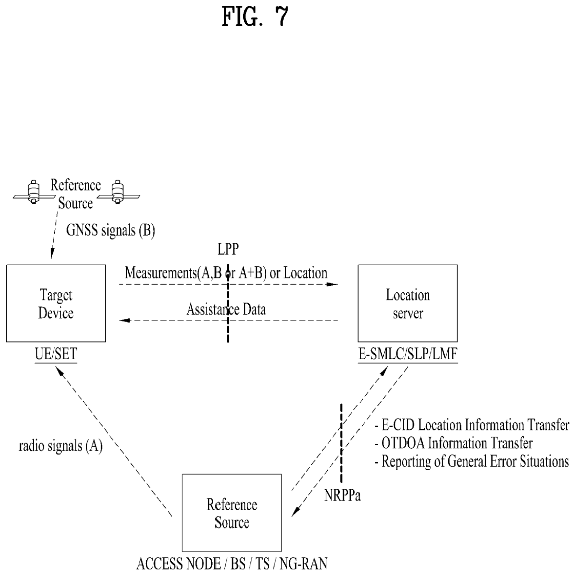

FIG. 7 is a diagram illustrating an exemplary positioning protocol configuration for positioning a UE, to which the embodiment is applicable.

Referring to FIG. 7, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

PRS (positioning reference signal)

For such positioning, a positioning reference signal (PRS) may be used. The PRS is a reference signal used to estimate the position of the UE.

A positioning frequency layer may include one or more PRS resource sets, each including one or more PRS resources.

Sequence generation

A PRS sequence $r(m)$ $(m = 0, 1, ...)$ may be defined by Equation 1.

[Equation 1]

$$r(m) = \frac{1}{\sqrt{2}}\big(1 - 2c(m)\big) + j\frac{1}{\sqrt{2}}\big(1 - 2c(m+1)\big)$$

In Equation 1, c(i) may be a pseudo-random sequence. A pseudo-random sequence generator may be initialized by Equation 2.

[Equation 2]

$$c_{\text{init}} = \left(2^{22}\left\lfloor\frac{n_{\text{ID,seq}}^{\text{PRS}}}{1024}\right\rfloor + 2^{10}\big(N_{\text{symb}}^{\text{slot}}n_{\text{s,f}}^{\mu} + l + 1\big)\big(2\big(n_{\text{ID,seq}}^{\text{PRS}} \bmod 1024\big) + 1\big)\right.$$
$$\left. + \big(n_{\text{ID,seq}}^{\text{PRS}} \bmod 1024\big)\right) \bmod 2^{31}$$

$n_{\text{s,f}}^{\mu}$ may be a slot number in a frame in an SCS configuration $\mu$. A DL PRS sequence ID $n_{\text{ID,seq}}^{\text{PRS}} \in \{0, 1, ..., 4095\}$ may be given by a higher-layer parameter (e.g., DL-PRS-SequenceId). 1 may be an OFDM symbol in a slot to which the sequence is mapped.

Mapping to physical resources in a DL PRS resource

A PRS sequence $r(m)$ may be scaled by $\beta_{\text{PRS}}$ and mapped to REs $(k, l)_{p,\mu}$, specifically by Equation 3. $(k, l)_{p,\mu}$ may represent an RE $(k, l)$ for an antenna port p and the SCS configuration $\mu$.

[Equation 3]

$$a_{k,l}^{(p,\mu)} = \beta_{\text{PRS}}\, r(m)$$

$$m = 0, 1, \ldots$$

$$k = mK_{\text{comb}}^{\text{PRS}} + \left(\left(k_{\text{offset}}^{\text{PRS}} + k'\right) \bmod K_{\text{comb}}^{\text{PRS}}\right)$$

$$l = l_{\text{start}}^{\text{PRS}}, l_{\text{start}}^{\text{PRS}} + 1, \ldots, l_{\text{start}}^{\text{PRS}} + L_{\text{PRS}} - 1$$

Herein, the following conditions may have to be satisfied:

- The REs $(k, l)_{p,\mu}$ are included in an RB occupied by a DL PRS resource configured for the UE;
- The symbol l not used by any SS/PBCH block used by a serving cell for a DL PRS transmitted from the serving cell or indicated by a higher-layer parameter SSB-positionInBurst for a DL PRS transmitted from a non-serving cell;
- A slot number satisfies the following PRS resource set-related condition;

$l_{\text{start}}^{\text{PRS}}$ is the first symbol of the DL PRS in the slot, which may be given by a higher-layer parameter DL-PRS-ResourceSymbolOffset. The time-domain size of the DL PRS resource, $L_{\text{PRS}} \in \{2,4,6,12\}$ may be given by a higher-layer parameter DL-PRS-NumSymbols. A comb size may be given by a higher-layer parameter transmissionComb. A combination $\{L_{\text{PRS}}, K_{\text{comb}}^{\text{PRS}}\}$ of $L_{\text{PRS}}$ and $K_{\text{comb}}^{\text{PRS}}$ may be one of $\{2, 2\}, \{4, 2\}, \{6, 2\}, \{12, 2\}, \{4, 4\}, \{12, 4\}, \{6, 6\}, \{12, 6\}$ and/or $\{12, 12\}$. An RE offset $k_{\text{offset}}^{\text{PRS}} \in \{0, 1, \ldots, K_{\text{comb}}^{\text{PRS}} - 1\}$ may be given by combOffset. A frequency offset $k'$ may be a function of $l - l_{\text{start}}^{\text{PRS}}$ as shown in Table 5.

[Table 5]

| $K_{\text{comb}}^{\text{PRS}}$ | Symbol number within the downlink PRS resource $l - l_{\text{start}}^{\text{PRS}}$ | | | | | | | | | | | |
|---|---|---|---|---|---|---|---|---|---|---|---|---|
| | **0** | **1** | **2** | **3** | **4** | **5** | **6** | **7** | **8** | **9** | **10** | **11** |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

A reference point for k=0 may be the position of point A in a positioning frequency layer in which the DL PRS resource is configured. Point A may be given by a higher-layer parameter dl-PRS-PointA-r16.

Mapping to slots in a DL PRS resource set

A DL PRS resource included in a DL PRS resource set may be transmitted in a slot and a frame which satisfy the following Equation 4.

[Equation 4]

$$\left(N_{\text{slot}}^{\text{frame},\mu} n_{\text{f}} + n_{\text{s,f}}^{\mu} - T_{\text{offset}}^{\text{PRS}} - T_{\text{offset,res}}^{\text{PRS}}\right) \bmod 2^{\mu} T_{\text{per}}^{\text{PRS}} \in \left\{i T_{\text{gap}}^{\text{PRS}}\right\}_{i=0}^{T_{\text{rep}}^{\text{PRS}}-1}$$

$N_{\text{slot}}^{\text{frame},\mu}$ may be the number of slots per frame in the SCS configuration $\mu$. $n_f$ may be a system frame number (SFN).

$n_{s,f}^{\mu}$ may be a slot number in a frame in the SCS configuration $\mu$. A slot offset $T_{\text{offset}}^{\text{PRS}} \in \{0, 1, \dots, T_{\text{per}}^{\text{PRS}} - 1\}$ may be

given by a higher-layer parameter *DL-PRS-ResourceSetSlotOffset*. A DL PRS resource slot offset $T_{\text{offset,res}}^{\text{PRS}}$ may be given by a higher layer parameter *DL-PRS-ResourceSlotOffset*. A periodicity

$T_{\text{per}}^{\text{PRS}} \in \{4, 5, 8, 10, 16, 20, 32, 40, 64, 80, 160, 320, 640, 1280, 2560, 5120, 10240\}$ may be given by a higher-layer parameter *DL-PRS-Periodicity*. A repetition factor $T_{\text{rep}}^{\text{PRS}} \in \{1, 2, 4, 6, 8, 16, 32\}$ may be given by a higher-layer parameter DL-PRS-ResourceRepetitionFactor. A muting repetition factor $T_{\text{muting}}^{\text{PRS}}$ may be given by a higher-layer parameter *DL-PRS-MutingBitRepetitionFactor*. A time gap $T_{\text{gap}}^{\text{PRS}} \in \{1, 2, 4, 8, 16, 32\}$ may be given by a higher-layer parameter *DL-PRS-ResourceTimeGap*.

UE Positioning Architecture

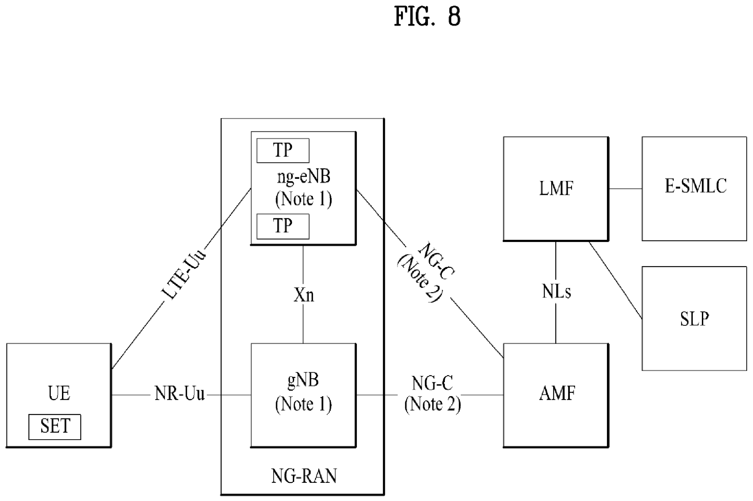

FIG. 8 illustrates an exemplary system architecture for measuring positioning of a UE to which the embodiment is applicable.

Referring to FIG. 8, an AMF may receive a request for a location service associated with a particular target UE from another entity such as a gateway mobile location center (GMLC) or the AMF itself decides to initiate the location service on behalf of the particular target UE. Then, the AMF transmits a request for a location service to a location management function (LMF). Upon receiving the request for the location service, the LMF may process the request for the location service and then returns the processing result including the estimated position of the UE to the AMF. In the case of a location service requested by an entity such as the GMLC other than the AMF, the AMF may transmit the processing result received from the LMF to this entity.

A new generation evolved-NB (ng-eNB) and a gNB are network elements of the NG-RAN capable of providing a measurement result for positioning. The ng-eNB and the gNB may measure radio signals for a target UE and transmits a measurement result value to the LMF. The ng-eNB may control several TPs, such as remote radio heads, or PRS-only TPs for support of a PRS-based beacon system for E-UTRA.

The LMF is connected to an enhanced serving mobile location center (E-SMLC) which may enable the LMF to access the E-UTRAN. For example, the E-SMLC may enable the LMF to support OTDOA, which is one of positioning methods of the E-UTRAN, using DL measurement obtained by a target UE through signals transmitted by eNBs and/or PRS-only TPs in the E-UTRAN.

The LMF may be connected to an SUPL location platform (SLP). The LMF may support and manage different location services for target UEs. The LMF may interact with a serving ng-eNB or a serving gNB for a target UE in order to obtain position measurement for the UE. For positioning of the target UE, the LMF may determine positioning methods, based on a location service (LCS) client type, required quality of service (QoS), UE positioning capabilities, gNB positioning capabilities, and ng-eNB positioning capabilities, and then apply these positioning methods to the serving gNB and/or serving ng-eNB. The LMF may determine additional information such as accuracy of the location estimate and velocity of the target UE. The SLP is a secure user plane location (SUPL) entity responsible for positioning over a user plane.

The UE may measure the position thereof using DL RSs transmitted by the NG-RAN and the E-UTRAN. The DL RSs transmitted by the NG-RAN and the E-UTRAN to the UE may include a SS/PBCH block, a CSI-RS, and/or a PRS. Which DL RS is used to measure the position of the UE may conform to configuration of LMF/E-SMLC/ng-eNB/E-UTRAN etc. The position of the UE may be measured by an RAT-independent scheme using different global navigation satellite systems (GNSSs), terrestrial beacon systems (TBSs), WLAN access points, Bluetooth beacons, and sensors (e.g., barometric sensors) installed in the UE. The UE may also contain LCS applications or access an LCS application through communication with a network accessed thereby or through another application contained therein. The LCS application may include measurement and calculation functions needed to determine the position of the UE. For example, the UE may contain an independent positioning function such as a global positioning system (GPS) and report the position thereof, independent of NG-RAN transmission. Such independently obtained positioning information may be used as assistance information of positioning information obtained from the network.

Operation for UE Positioning

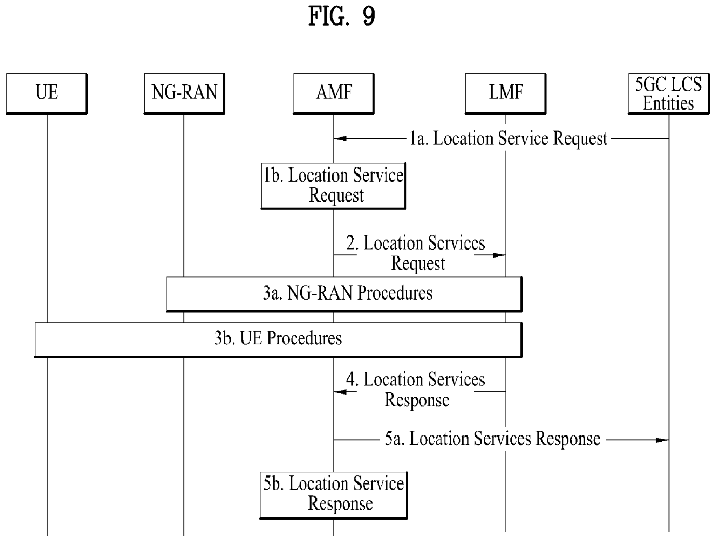

FIG. 9 illustrates an implementation example of a network for UE positioning.

When an AMF receives a request for a location service in the case in which the UE is in connection management (CM)-IDLE state, the AMF may make a request for a network triggered service in order to establish a signaling connection with the UE and to assign a specific serving gNB or ng-eNB. This operation procedure is omitted in FIG. 9. In other words, in FIG. 9 it may be assumed that the UE is in a connected mode. However, the signaling connection may be released by an NG-RAN as a result of signaling and data inactivity while a positioning procedure is still ongoing.

An operation procedure of the network for UE positioning will now be described in detail with reference to FIG. 9. In step 1a, a 5GC entity such as GMLC may transmit a request for a location service for measuring the position of a target UE to a serving AMF. Here, even when the GMLC does not make the request for the location service, the serving AMF may determine the need for the location service for measuring the position of the target UE according to step 1b. For example, the serving AMF may determine that itself will perform the location service in order to measure the position of the UE for an emergency call.

In step 2, the AMF transfers the request for the location service to an LMF. In step 3a, the LMF may initiate location procedures with a serving ng-eNB or a serving gNB to obtain location measurement data or location measurement assistance data. For example, the LMF may transmit a request for location related information associated with one or more UEs to the NG-RAN and indicate the type of necessary location information and associated QoS. Then, the NG-RAN may transfer the location related information to the LMF in response to the request. In this case, when a location determination method according to the request is an enhanced cell ID (E-CID) scheme, the NG-RAN may transfer additional location related information to the LMF in one or more NR positioning protocol A (NRPPa) messages. Here, the "location related information" may mean all values used for location calculation such as actual location estimate information and radio measurement or location measurement. Protocol used in step 3a may be an NRPPa protocol which will be described later.

Additionally, in step 3b, the LMF may initiate a location procedure for DL positioning together with the UE. For example, the LMF may transmit the location assistance data to the UE or obtain a location estimate or location measurement value. For example, in step 3b, a capability information transfer procedure may be performed. Specifically, the LMF may transmit a request for capability information to the UE and the UE may transmit the capability information to the LMF. Here, the capability information may include information about a positioning method supportable by the LFM or the UE, information about various aspects of a particular positioning method, such as various types of assistance data for an A-GNSS, and information about common features not specific to any one positioning method, such as ability to handle multiple LPP transactions. In some cases, the UE may provide the capability information to the LMF although the LMF does not transmit a request for the capability information.

As another example, in step 3b, a location assistance data transfer procedure may be performed. Specifically, the UE may transmit a request for the location assistance data to the LMF and indicate particular location assistance data needed to the LMF. Then, the LMF may transfer corresponding location assistance data to the UE and transfer additional assistance data to the UE in one or more additional LTE positioning protocol (LPP) messages. The location assistance data delivered from the LMF to the UE may be transmitted in a unicast manner. In some cases, the LMF may transfer the location assistance data and/or the additional assistance data to the UE without receiving a request for the assistance data from the UE.

As another example, in step 3b, a location information transfer procedure may be performed. Specifically, the LMF may send a request for the location (related) information associated with the UE to the UE and indicate the type of necessary location information and associated QoS. In response to the request, the UE may transfer the location related information to the LMF. Additionally, the UE may transfer additional location related information to the LMF in one or more LPP messages. Here, the "location related information" may mean all values used for location calculation such as actual location estimate information and radio measurement or location measurement. Typically, the location related information may be a reference signal time difference (RSTD) value measured by the UE based on DL RSs transmitted to the UE by a plurality of NG-RANs and/or E-UTRANs. Similarly to the above description, the UE may transfer the location related information to the LMF without receiving a request from the LMF.

The procedures implemented in step 3b may be performed independently but may be performed consecutively. Generally, although step 3b is performed in order of the capability information transfer procedure, the location assistance data transfer procedure, and the location information transfer procedure, step 3b is not limited to such order. In other words, step 3b is not required to occur in specific order in order to improve flexibility in positioning. For example, the UE may request the location assistance data at any time in order to perform a previous request for location measurement made by the LMF. The LMF may also request location information, such as a location measurement value or a location estimate value, at any time, in the case in which location information transmitted by the UE does not satisfy required QoS. Similarly, when the UE does not perform measurement for location estimation, the UE may transmit the capability information to the LMF at any time.

In step 3b, when information or requests exchanged between the LMF and the UE are erroneous, an error message may be transmitted and received and an abort message for aborting positioning may be transmitted and received.

Protocol used in step 3b may be an LPP protocol which will be described later.

Step 3b may be performed additionally after step 3a but may be performed instead of step 3a.

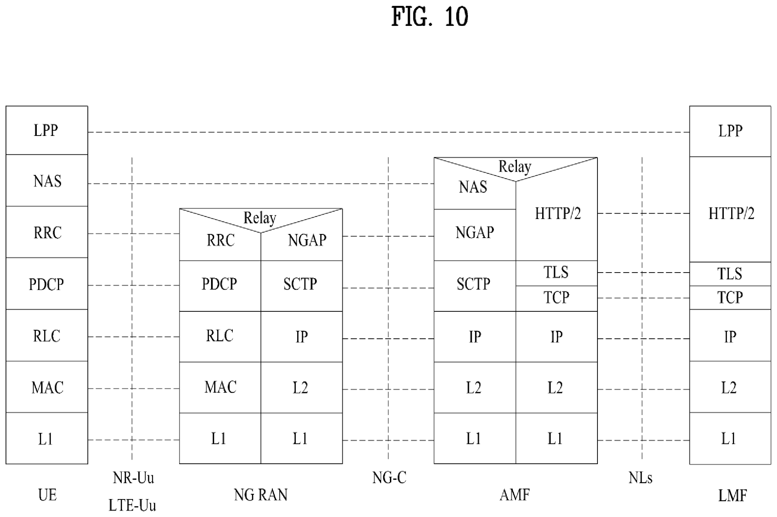

In step 4, the LMF may provide a location service response to the AMF. The location service response may include information as to whether UE positioning is successful and include a location estimate value of the UE. If the procedure of FIG. 9 has been initiated by step 1a, the AMF may transfer the location service response to a 5GC entity such as a GMLC. If the procedure of FIG. 10 has been initiated by step 1b, the AMF may use the location service response in order to provide a location service related to an emergency call.

LTE Positioning Protocol (LPP)

FIG. 10 illustrates an exemplary protocol layer used to support LPP message transfer between an LMF and a UE. An LPP protocol data unit (PDU) may be carried in a NAS PDU between an AMF and the UE.

Referring to FIG. 10, LPP is terminated between a target device (e.g., a UE in a control plane or an SUPL enabled terminal (SET) in a user plane) and a location server (e.g., an LMF in the control plane or an SLP in the user plane). LPP messages may be carried as transparent PDUs cross intermediate network interfaces using appropriate protocols, such an NGAP over an NG-C interface and NAS/RRC over LTE-Uu and NR-Uu interfaces. LPP is intended to enable positioning for NR and LTE using various positioning methods.

For example, a target device and a location server may exchange, through LPP, capability information therebetween, assistance data for positioning, and/or location information. The target device and the location server may exchange error information and/or indicate abort of an LPP procedure, through an LPP message.

NR Positioning Protocol A (NRPPa)

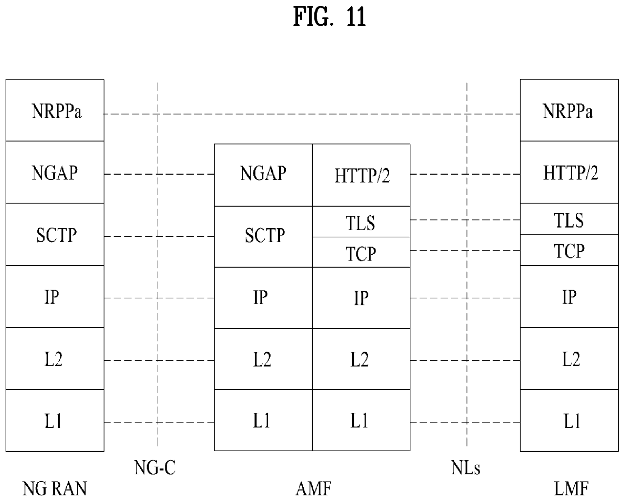

FIG. 11 illustrates an exemplary protocol layer used to support NRPPa PDU transfer between an LMF and an NG-RAN node.

NRPPa may be used to carry information between an NG-RAN node and an LMF. Specifically, NRPPa may carry an E-CID for measurement transferred from an ng-eNB to an LMF, data for support of an OTDOA positioning method, and a cell-ID and a cell position ID for support of an NR cell ID positioning method. An AMF may route NRPPa PDUs based on a routing ID of an involved LMF over an NG-C interface without information about related NRPPa transaction.

An NRPPa procedure for location and data collection may be divided into two types. The first type is a UE associated procedure for transfer of information about a particular UE (e.g., location measurement information) and the second type is a non-UE-associated procedure for transfer of information applicable to an NG-RAN node and associated TPs (e.g., gNB/ng-eNB/TP timing information). The two types may be supported independently or may be supported simultaneously.

Positioning Measurement Method

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference of Arrival)

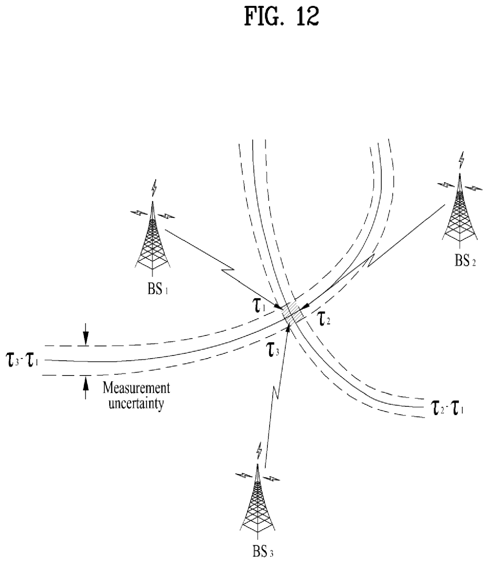

FIG. 12 is a diagram illustrating an observed time difference of arrival (OTDOA) positioning method, to which the embodiment is applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 5 below.

[Equation 5]

$$RSTDi_{,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 5, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io
- E-UTRAN measurement: ng-eNB Rx-Tx time difference, timing advance (TADV), and/or AoA

Here, TADV may be divided into Type 1 and Type 2 as follows.

$T_{ADV}$ Type 1 = (ng-eNB Rx-Tx time difference)+(UE E-UTRA Rx-Tx time difference)

TADV Type 2 = ng-eNB Rx-Tx time difference

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

**ISAC (Integrated Sensing and Communication) & JCAS**

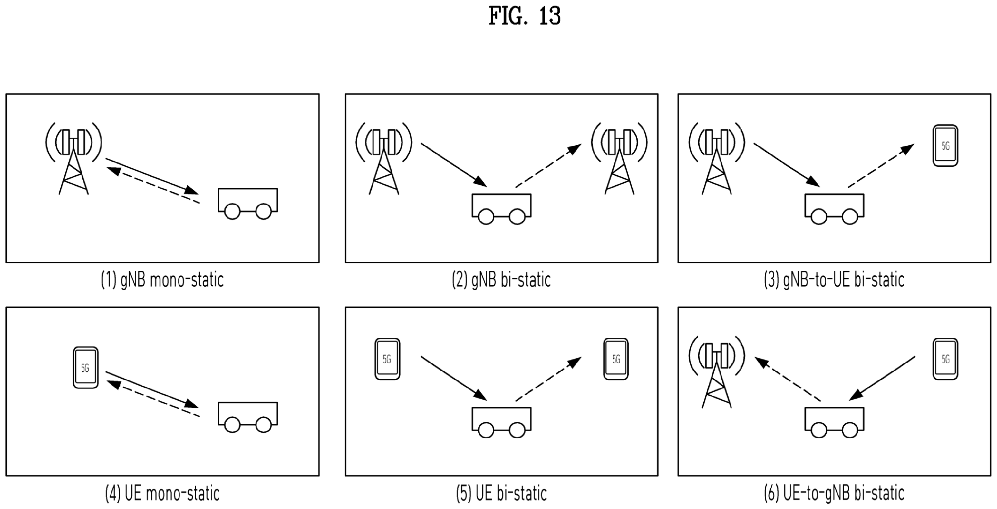

FIG. 13 illustrates examples of wireless sensing modes supported in ISAC/JCAS.

Various methods for using wireless sensing are being widely discussed in recent wireless communication systems. In general, the conventional radar technology may be considered for the purpose of wireless sensing. However, there may be constraints associated with radar technology for sensing, as it is specialized for sensing and may not consider the characteristics of communication. Additionally, separate devices may be required for transmitting and receiving nodes to transmit and receive signals for wireless sensing. To address these issues, methods for using wireless sensing in wireless communication systems that support cellular networks, such as 5G and/or next-generation 6G, are actively being researched. For example, these methods include integrated sensing and communication (ISAC) or joint communication and sensing (JCAS).

In 3GPP standardization, studies for supporting ISAC in 5G/6G have been initiated. According to TR 22.837 published by 3GPP SA1 WG, wireless sensing is defined as a technology that uses radio waves to measure a distance, angle, or instantaneous velocity for the purpose of acquiring information on the environment and/or surrounding objects. A scenario where sensing and communication share the same frequency band and hardware is being considered. In addition, methods of sharing or reusing radio waves intended for communication (e.g., RSs for communication such as an SSB, DMRS, CSI-RS, and/or SRS) for radio waves for sensing or methods of designing separate radio waves for wireless sensing may also be considered.

In general, wireless sensing supported in ISAC involves a process where signals transmitted from the transmitter are reflected off a target object and received by the receiver. Depending on the relationship between the transmitter and receiver, different sensing modes may be defined. Based on whether the transmitter and receiver are matched, a case where the transmitter and receiver are matched may be defined as a mono-static sensing mode, and a case where the transmitter and receiver are not matched may be defined as a bi-static sensing mode.

(1) BS mono-static sensing mode: A BS that transmits a radio wave receives a reflected signal.
(2) BS-to-BS bi-static sensing mode: Another BS receives a reflected signal of a radio wave transmitted by a specific BS.
(3) BS-to-UE bi-static sensing mode: A UE receives a reflected signal of a radio wave transmitted by a BS.
(4) UE mono-static sensing mode: A UE that transmits a radio wave receives a reflected signal.
(5) UE-to-UE bi-static sensing mode: Another UE receives a reflected signal of a radio wave transmitted by a specific transmitting UE.
(6) UE-to-BS bi-static sensing mode: A BS receives a reflected signal of a radio wave transmitted by a transmitting UE.

In addition to the six use cases described above, a sensing mode including multiple transmitting/receiving nodes may be referred to a multi-static sensing mode.

The application of wireless sensing through ISAC/JCAS is being considered in various scenarios. Generally, wireless sensing is considered for the purpose of acquiring information on a target with no communication module (or independent of communication modules). For example, considerable scenarios may be broadly divided into three scenarios.

(1) Object detection and tracking: This scenario aims to detect target objects or people and track location information. For example, the following scenarios: intrusion detection in indoor/outdoor environments, tracking the position of an unmanned aerial vehicle (UAV) or automated guided vehicle (AGV), and supporting autonomous driving may be considered.
(2) Environment monitoring: This scenario aims to collect information on the surrounding environment of transmitting/receiving nodes. For example, the following scenarios: rainfall observation and flood detection may be considered.
(3) Motion monitoring: This scenario aims to detect the motion of a target. For example, scenarios for distinguishing human movements or gestures may be considered.

The performance metrics and levels required for each of the above scenarios may vary and differ from one another. To design suitable ISAC/JCAS for the service quality required for each scenario, various key performance requirements need to be considered. In the 3GPP standard, TS 22.137, key performance requirements required for each service scenario are defined as follows: positioning estimation accuracy, velocity estimation accuracy, reliability (confidence level), sensing resolution, missed detection probability, false alarm probability, maximum sensing service delay, and refreshing rate. The required levels for each key performance requirement may vary depending on the service scenario.

**CPM (Carrier Phase Measurement)**

Carrier phase measurement (CPM) is one of the position estimation algorithms used in the GPS/GNSS. In brief, the CPM is a scheme of estimating the distance between a transmitter and receiver by measuring the phase of a received transmission signal and determining the position based on the estimated distance. In other words, the position of the user may be measured by calculating the distance to each of the multiple satellites based on signals received from the multiple satellites. In this case, it is assumed that there is a Line of Sight (LoS) between the satellite and the user, and based on this assumption, the time difference between the transmitter and receiver may be translated into the distance between the transmitter and receiver. Meanwhile, satellite channels may experience multi-path and delays due to the ionosphere, but the multi-path and delays caused by the ionosphere may be mitigated through modeling.

In a specific scenario, the following are discussed in relation to (3GPP) CPM.

For higher positioning accuracy, two promising technologies identified in the specific scenario may be considered in Rel-18. One is to increase a bandwidth by using a 5G spectrum for transmitting and receiving a positioning reference signal on intra-band carriers based on PRS/SRS bandwidth aggregation. Another is to use NR carrier phase measurement. GNSS carrier phase positioning (CPP) has been used very successfully for centimeter-level positioning, but its application has been limited to outdoor applications. NR CPP has the potential to significantly improve performance in indoor and outdoor deployments compared to the existing NR positioning methods, and may provide lower latency and lower UE power consumption compared to outdoor RTK-GNSS. The detailed object of the specific scenario is as follows.

(1) Improved accuracy, integrity, and power efficiency: Research on solutions for the integrity of RAT-dependent positioning technology

- Identify cause of error [RAN1, RAN2].
- Research on methodologies, procedures, signals, and the like for integrity determination for UE-based and UE-assisted positioning [RAN2].
- If possible, focus on reusing concepts and principles under development for RAT-independent GNSS positioning integrity.

(2) Research on solutions for improving accuracy based on PRS/SRS bandwidth aggregation for intra-band carriers, e.g., time error, phase coherence, frequency error, power imbalance, and the like [RAN4].

- Research on solutions for improving accuracy based on NR carrier phase measurement: Reference signal, physical layer measurement, and physical layer procedure enabling NR carrier phase measurement for UE-based and UE-assisted positioning [RAN1]. A new reference signal is considered only when necessary, with a focus on reusing the previous PRS and SRS.

(3) Research on requirements for LPHAP developed in SA1 and evaluation on whether the previous RAN capability is capable of supporting this power consumption and positioning requirements. Based on the evaluation, if deemed beneficial, research is conduced into potential improvements to address limitations [RAN2, RAN1].

- Research is limited to a single representative LPHAP use case (Use Case 6 defined in TS 22.104). Selected use cases may be reviewed at start of the research.
- Research is limited to enhancements to RRC_INACTIVE and/or RRC_IDLE states.

That is, according to the specific scenario described above, CPM is determined to be determined as the main item in Rel-18 positioning. The previous CPM is one of the position estimation algorithms used in GPS/GNSS. Briefly, a phase of a received transmission signal is measured to estimate a distance between a transmitting end and a receiving end, and positioning is performed based on the estimated distance. That is, a user receives signals from a plurality of satellites and measures a distance to each satellite based on the signal to measure a position of the user. In this case, it is assumed that there is a Line of Sight (LoS) between the satellite and the user, and thus a difference in time received between the transmitting end and the receiving end may be substituted for a distance between the transmitting end and the receiving end. Characteristically, multipath and delay may occur in a satellite channel due to ionosphere, which are eliminated through modeling.

The aforementioned CPM may be compared to code phase measurement. While the code phase measurement is commonly used, in GPS/GNSS-related positioning, the actual phase of a carrier may be directly measured. Typically, the CPM provides higher accuracy than the code phase measurement because the CPM directly measures the phase within a cycle corresponding to the carrier frequency. Meanwhile, the CPM and code phase measurement may be performed based on similar or identical algorithms or methods.

In the CPM, the following fundamental positioning principle may be used: the transmitter transmits a predetermined signal at a specific time, and the receiver measures the exact reception time at the carrier phase level (i.e., within the cycle of the carrier frequency). In this case, the distance between the transmitter and receiver may be measured very accurately based on the CPM. To use such a method, the distance is typically converted into a phase, and a pseudo-range equation may be derived based on the conversion. As CPM positioning based on the pseudo-range equation, positioning based on GNSS/GPS may be performed by applying Equation 6 below.

[Equation 6]

$$\mathrm{p} = \rho + d_p + c(dt - dT) + d_{ion} + d_{trop} + e_{mp} + e_p$$

In Equation 6, p denotes pseudo-range measurement, $\rho$ denotes the true range, $d_p$ denotes satellite orbital errors, c denotes the speed of light, $dt$ denotes the satellite clock offset from GPS time, $dT$ denotes the receiver clock offset from GPS time, $d_{ion}$ denotes the ionospheric delay, $d_{trop}$ denotes the tropospheric delay, $e_{mp}$ denotes the multi-path effect, and $e_p$ denotes the receiver noise.

These terms may be considered in the GPS/GNSS, and there are techniques to mitigate or remove each term. Additionally, although it is not explicitly represented in Equation 6, the carrier phase information that the user may estimate is within a range of $[0, 2\pi]$. For distances exceeding the range, a separate estimation method is needed. In other words, when the actual distance between the user and the satellite is converted into a phase, the receiver needs to estimate the distance corresponding to an integer multiple of the frequency cycle through a separate estimation method (integer ambiguity resolution).

**Differencing**

Positioning using CPM in the GNSS/GPS may also consider the following factors. Specifically, a cycle slip may occur at the receiver, which may require reporting or correction therefor. The cycle slip may occur when the receiver is incapable of tracking a signal beyond a specific threshold (e.g., a half-cycle). When such a cycle slip occurs, the measurement of the corresponding epoch from the transmitter may become invalid. After the cycle slip, measurements may be reused, but the integer ambiguity needs to be re-estimated.

Additionally, the issue of position dilution (dilution of precision) may also arise. The position dilution means that even when positioning is performed based on the same number of transmitters and receivers and with the same signal-to-noise ratio (SNR), the accuracy of the positioning may vary depending on the relative positions (or distances) between the transmitter and receiver, which is often referred to as geometric dilution of precision (GDOP). For example, when a receiver calculates the position based on signals from N transmitters, the positioning accuracy of the receiver may be lower if the transmitters are closely grouped, compared to when the transmitters are more evenly distributed.

**Integer Ambiguity Resolution**

First, the following may be considered as solutions related to integer ambiguity resolution (refer to Lee, Hongkyu (2014). "An Instantaneous Integer Ambiguity Resolution for GPS Real-Time Structure Monitoring," Journal of Korean Society of Civil Engineers, Vol. 34, No. 1, pp. 342-353 (in Korean)).

In dynamic positioning using GPS carriers, centimeter-level accuracy may be achieved through precise determination of unknown integer ambiguity contained in observation data. To this end, ambiguity resolution, which is a mathematical procedure for converting ambiguous range observation data with uncertainty into a precise range with millimeter-level accuracy, is necessary. For GPS dynamic positioning, it is common to apply the integer-constrained least squares (Teunissen, 1994; Han et al., 1997; Verhagen, 2004).

However, when the receiver is moving, there is a limitation on observation data capable of being used in the mathematical model compared to when the receiver is stationary, resulting in lower estimation precision and higher correlation, which makes it difficult to quickly and accurately resolve the integer ambiguity (Teunissen, 1993; Lee et al., 2005). Therefore, in GPS dynamic positioning, it is common to use the on-the-fly (OTF) method, which extracts and accumulates only the integer ambiguity part of a normal equation. The time required for initializing the integer ambiguity may range from several seconds to several minutes, depending on the satellite geometry and residual errors (Hofmann-Wellenhof et al., 2001). This method depends on the previously determined integer ambiguity after initialization as long as there are no signal interruptions (cycle slips). In this method, when initialization is required, it is not possible to perform high-precision positioning during the initialization period. Additionally, recalculation of the integer ambiguity is required due to changes in the satellite geometry, and continuous monitoring for signal interruptions is necessary, which makes the algorithm inherently complex.

In the mid-1990s, with the emergence of dual-frequency receivers capable of observing a precise pseudo-range, instantaneous ambiguity resolution has been developed for baselines of around 10 km (Han et al., 1996). This method independently resolves the integer ambiguity for each epoch whenever the GPS receiver acquires both the carrier phase and precise pseudo-range. Since the method does not require additional algorithms for checking the signal interruption or satellite geometry, the method is suitable for GPS structural monitoring environments where such interruptions frequently occur due to the structure or passing vehicles. However, the performance of the instantaneous ambiguity resolution is significantly affected by the satellite geometry and residual errors. Particularly, when fewer than five satellites are observed or when multi-path effects become significant, the performance thereof degrades (Lee et al., 2004).

There are a variety of algorithms for performing integer ambiguity resolution, and one of the most well-known and effective methods is least squares ambiguity decorrelation adjustment (LAMBDA). To use the LAMBDA, the float estimate of the position, i.e., the positioning within the cycle should be separated from the integer ambiguity. Since the integer ambiguity is an integer rather than a floating point value, the obtained float solution is not the exact solution and may be further refined. The ellipsoid formed by the covariance of the integer ambiguity becomes extremely elongated in one direction, and as a result, searching within this space is inefficient. Therefore, the LAMBDA transforms the system with the elongated ellipsoid to a system closer to a sphere, which is more efficient than previous methods in searching for solutions to the integer ambiguity.

Another method for estimating integer ambiguity involves using both CPM and code phase measurement at each epoch. The downside of this method is that a time slew value is required to obtain the correlation between the CPM and code phase measurement, and GPS outputs at 1 Hz from the Novatel Superstar II. A brief summary thereof is that the measurement for a single epoch and the covariance of the integer ambiguity from the previous epoch are used. The reason for using the covariance from the previous epoch is that when the receiver maintains phase lock on the carrier phase, the integer ambiguity remains constant across the two epochs. In addition, there are other algorithms for estimating integer ambiguity such as algorithms based on the extended Kalman filter, and there are many variations.

## Carrier phase measurement in NR

The aforementioned CPM in the GPS/GNSS may be based on a single carrier. Specifically, in the CPM, the phase may be estimated based on the transmission and reception of sinusoidal signals, rather than in the code domain. The CPM between a satellite and user in the GPS/GNSS may be introduced to the gNB (or TRP) and UE in NR. In the introduction thereof to NR, there may be the following differences. Unless the sinusoidal signal is redefined as a reference signal, OFDM-based CPM should be performed. In other words, the OFDM-based CPM differs from GPS/GNSS-based CPM in that the OFDM-based CPM is performed on relatively wideband signals.

First, the current reference signal for positioning in NR is a PRS. If a sinusoidal signal is redefined based on the PRS, the sinusoidal signal may have the configuration characteristics of the PRS. That is, the bandwidth (BW) configuration for the sinusoidal signal may be more flexible. Additionally, the probability of having a LoS path between the BS (or TRP) and the user may be lower than the probability of having a LoS path between the satellite and the user. In other words, since the multi-path effects between the BS (or TRP) and the user are incapable of being ignored, the CPM in NR should also consider the effects of multi-path between the BS (or TRP) and the user. In the CPM in NR, non-line of sight (NLOS) elimination or LOS path estimation may be treated with greater importance from the perspective of algorithms. Additionally, compared to the GPS, NR typically has higher carrier frequencies, larger BWs, and stricter latency requirements. Consequently, in the CPM in NR, the time required to resolve integer ambiguity needs to be further reduced.

Solutions may be needed to address issues related to user positioning based on the CPM using the PRS in NR. Since the PRS is a reference signal with a BW, there should be a common understanding between the higher layers and the UE regarding which frequency within a given PRS is used for phase measurement. In contrast, existing NR positioning methods (e.g., OTDOA, AoA, AoD, etc.) do not require specifying or indicating specific frequency resources. However, in CPM-based positioning using the PRS, an additional operation of specifying or reporting a specific frequency may be required.

The differencing described above may be performed as an operation to eliminate errors (errors occurring in phase measurement) that may occur due to oscillators of the receiver/transmitter in positioning based on CPM/CPP. For example, the UE may eliminate phase errors that may occur in the receiver through a phase difference between the PRSs received from each of the two TRPs. Similarly, the TRP or BS may transmit PRSs to two UEs, receive phase values measured based on the PRSs from the two UEs, and calculate a difference between the two received phase values to eliminate phase errors occurring in the transmitter. This operation may be defined as double differencing.

As described above, in a user position estimation scenario in a wireless access system, a scenario in which the position of the user is estimated based on carrier phase measurement (CPM) or carrier phase positioning (CPP) may be considered. Here, the CPM or the CPM may be a method of using a phase of a specific frequency (carrier) to calculate a distance to a user from a BS, such as when a user who receives a reference signal configured by the BS to estimate the position of the user estimates the distance through a time difference from a time of transmission to a time of reception of the reference signal. In this type of position estimation method, it is expected that an error elimination scheme through differencing between measurement values may be used. To this end, the UE may expect to have two or more different resources configured for simultaneous measurement/estimation. In this case, there may be difficulties in performing measurement/estimation simultaneously on different resources due to a measurement priority for each PRS resource configured in the existing manner in the UE. Hereinafter, a method to resolve this problem is described in detail.

**Priority rule for simultaneous measurement of carrier phase**

LMF may be configured to allow a UE to measure different PRS resources simultaneously (e.g., Intra-UE simultaneous PRS reception/measurement). To this end, in a stage of instructing the UE to measure and report a reference signal carrier phase (RSCP) and/or a reference signal carrier phase difference (RSCPD), the LMF may indicate a plurality of PRS resources within an indicated time window(s) to indicate intra-UE simultaneous PRS reception/measurement. That is, if a plurality of PRS resource sets included within a single time window are indicated, the UE may determine that simultaneous PRS reception is indicated.

However, if measurement is performed based on the existing PRS resource set unit priority rule, the UE inevitably performs measurement only on the PRS resource set with the highest priority among the PRS resource sets with different priorities. In this case, it may be difficult to perform simultaneous reception/measurement for the PRS resource described above. To resolve this problem, the existing method of reinterpreting a priority of PRS resource set unit and/or a method of configuring a priority of a dedicated PRS resource set for the CCP may be considered.

The LMF may indicate a plurality of PRS resource sets to the UE for the purpose of intra-UE simultaneous PRS reception/measurement. As such, a plurality of PRS resource sets for intra-UE simultaneous PRS reception/measurement may be indicated for each time window. Alternatively, the LMF may indicate a plurality of PRS resource sets for the purpose of intra-UE simultaneous PRS reception/measurement, and may indicate one PRS resource set for other purposes. Alternatively, the existing priority configuration for measurement of the UE has the following hierarchy. Priority configuration for TRP may take precedence, and priorities for PRS resource sets may be optionally configured. Therefore, hereinafter, the existing priority configuration may be interpreted as replacing a priority for TRP even though it is described as a priority for PRS resource set. That is, in some cases, the "priority of the PRS resource set by the existing method" described below may be interpreted as a replacement for the "priority for the TRP ID", and this interpretation method may be a method that takes into account the case of the priority configured to the UE by the existing method.

Hereinafter, the fact that a specific PRS resource set has the highest priority among the PRS resource sets may mean that the specific PRS resource set is selected with the highest priority over the remaining PRS resource sets and CPP is measured.

1. New interpretation of existing prioritization of PRS resource set unit

The UE may be instructed to perform intra-UE simultaneous PRS reception/measurement in a state in which a priority of the PRS resource set unit according to the existing method is configured from the LMF. In this case, the UE may reinterpret a priority of the PRS resource set unit as follows.

(1) Method 1

For Method 1, the UE may determine that the highest priority is indicated/configured for the purpose of the PRS resource set indicated by the LMF for intra-UE simultaneous PRS measurement, regardless of a priority of the previously indicated/configured PRS resource set unit.

That is, when a specific PRS resource set is indicated for intra-UE simultaneous PRS measurement, the UE may determine that the specific PRS resource set indicated for the CPP measurement has a higher priority than the priority of the previous PRS resource set. In other words, the UE may disregard the indicated priorities in a standard manner for a specific PRS resource set indicated for the CPP measurement and determine that the highest priority is configured/indicated. Alternatively, the UE may determine that the highest priority (e.g., priority 0) for the specific PRS resource set indicated for the CPP measurement overrides any previously established priorities. For example, the UE may determine that all PRS resource sets indicated for the purpose of CPP measurement (or for the purpose of intra-UE simultaneous PRS measurement) have the same priority 0 indicated/configured, and may not consider priorities among PRS resource sets indicated for the purpose of intra-UE simultaneous PRS measurement.

Alternatively, the UE may determine/consider that the highest priority is configured for all PRS resources belonging to the TRP that transmits the indicated PRS resource sets for the purpose of intra-UE simultaneous PRS measurements from the LMF. That is, the UE may disregard the priority indicated/configured in the existing manner for at least one PRS resource set indicated for the purpose of intra-UE simultaneous PRS measurement or CPP measurement and determine that the highest priority is configured/indicated for the PRS resource sets transmitted from the TRP to which the at least one PRS resource set belongs. Alternatively, the UE may determine that the previous priority for the PRS resource sets of the TRP in which at least one PRS resource set is transmitted has been overridden with the highest priority. In other words, if at least one PRS resource set is indicated for the purpose of intra-UE simultaneous PRS measurement or CPP measurement, the UE may determine that the highest priority, rather than the previous priority, is indicated/configured for the at least one PRS resource set (or a plurality of PRS resource sets related with a TRP transmitting the at least one PRS resource set) by the indication of the at least one PRS resource set.

When reinterpreting the priority by the method described above, it is also possible to determine the priority among PRS resource sets having the same priority (PRS resource sets indicated for the purpose of intra-UE simultaneous PRS measurement from LMF). In this case, the UE may determine the priority among the PRS resource sets according to the previously indicated priority. For example, the UE may first determine that the PRS resource sets indicated by the LMF for the purpose of intra-UE simultaneous PRS measurement have priority over the remaining PRS resource sets, and secondarily determine the priority between the PRS resource sets based on the previous priority (the previous priority established between the PRS resource sets regardless of the purpose of CPP measurement, as described above).

(2) Method 2: Time domain priority for CPP

In Method 2, the UE may consider/determine that two or more PRS resource sets having the same or similar time resource configurations among a plurality of PRS resource sets configured by the existing priority rules have the same priority configured.

For example, the UE may interpret the previously established priority rules from the LMF as follows when CPP measurements (or intra-UE simultaneous PRS/CPP measurements) are established. Even if different priorities are configured for the two PRS resource sets, the UE may determine that the higher priority among the two PRS resource sets is configured equally for both PRS resource sets if the two PRS resource sets have the same time configuration or are configured within a certain time interval. Here, the case in which the two PRS resource sets are configured within a certain time interval may be a case in which the time resources of the two PRS resource sets are configured within a single indicated time window interval, or a case in which the time resources between the two PRS resource sets are located within a time interval agreed or promised in advance.

For example, there may be PRS resources of another PRS resource set configured in the same slots based on all/part of the periodic positions of the slots in which PRS resources included in a specific PRS resource set with high priority are configured (e.g., another PRS resource set with the same parameters such as period and slot offset of the specific PRS resource set or with which time resources overlap periodically). In this case, even if the other PRS resource set has a lower priority than the specific PRS resource set, the UE may determine/consider that the priority of the other PRS resource set has the same priority as the priority of the specific PRS resource set.

(3) Method 3

For Method 3, the UE may determine that a higher priority is indicated for PRS resource sets (or TRPs) containing PRS resources received within the indicated time window for the purpose of intra-UE simultaneous CPP measurement than the priority of the previously configured PRS resource set unit.

In detail, when CPP measurement is configured (or, intra-UE simultaneous CP measurement is configured), the UE may receive a time window (time window for CPP) from the LMF. In this case, the UE may reinterpret the priorities of the previously configured PRS resource set as follows. The UE may determine/consider that the PRS resource set (or the PRS resource set of the TRP transmitting the PRS resource) in which the PRS resource expected to be received within the time window is configured has a higher priority (e.g., the highest priority) than the priority of the previously configured PRS resource set.

(4) Method 4

For Method 4, the LMF may separately configure priorities for a PRS resource set for CPP measurement based on information reported by the UE, or update priorities for the previously configured PRS resource set.

In detail, a UE with CPP measurement capability may explicitly report RSRPs for a specific number of PRS resource sets according to the previous priority rules after receiving priorities for PRS resource sets from the LMF, or implicitly report RSRPs through PRS resource set IDs, and the like according to the order of RSRPs, and the like. Based on the reported information, the LMF may separately configure priorities among PRS resource sets for CPP measurement or update the previous priorities for the previous PRS resource sets. The UE may select PRS resource sets based on priorities configured separately for CPP measurements or updated priorities, and perform measurements and reporting for the selected PRS resource sets.

2. Configuration of new priorities for CPP measurement

For CPP measurement/reporting, PRS resource pairs and priorities between the PRS resource pairs may be configured as follows.

- dl-PRS-ResourcePrioritySubset-Sup: This field provides a subset of DL-PRS Resources, which is associated with nr-DL-PRS-ResourceID for the purpose of prioritization of CPP reporting,

- NOTE: This field is only applicable to CPP method and should be ignored for DL-TDOA and Multi-RTT positioning.

As such, for the purpose of simultaneous CPP measurement, sequential priorities may be configured for each PRS resource pair through dl-PRS-ResourcePrioritySubset-Sup, and the like. Such priorities may be configured only for a subset of the PRS resources configured for the UE, or for PRS resource pairs within a PRS resource set. The purpose of simultaneous CPP measurement is double differencing, and thus the PRS resource pairs for which the priorities are configured may be PRS resource pairs for different PRS resource sets or different TRPs.

Considering these methods, the current CPP measurement may be configured for joint reporting (RSCPD with RSTD, or RSCP with multi-RTT).

In detail, if the PRS resources for joint reporting do not need to be identical (i.e., if the PRS resources for measuring/reporting RSTD and multi-RTT and the PRS resources for measuring/reporting RSCPD/RSCP are allowed to be different from each other), the UE may separately determine the priority of the PRS resources (or PRS resource sets) according to each positioning scheme. This is because, even in the case of joint reporting, the purpose of the RSTD/multi-RTT measurement itself is to eliminate candidate integer values for resolving integer ambiguity resolution at the LMF or UE stage rather than to increase the accuracy of the CPP measurement. In this case, the UE may always be instructed to perform both measurements based on legacy positioning schemes and CPP measurements from the LMF (i.e., non-standalone CPP measurements). However, if CPP measurement that does not include measurements of the existing positioning scheme (i.e., a standalone CPP measurement) is configured, or if standalone CPP measurements and non-standalone CPP measurements are frequently switched, the priority application method described above (i.e., determination of priority for each positioning measurement) may be applied.

For example, even if configured to joint reporting, RSTD/multi-RTT measurements may be performed on separate PRS resources from RSCP/RSCPD measurements. Therefore, the priority of the PRS resource set of RSTD/multi-RTT measurement may follow the configuration of the previous priority, and the priority of the PRS resource set of RSCP/RSCPD measurement may follow the configuration of the priority for the PRS resource pair within a separately configured PRS resource set. Alternatively, each measurement priority may additionally consider an additional condition. For example, it may be considered to determine priorities by assuming the same QCL assumption (Quasi Co Location assumption) between the PRS resource set for RSTD/multi-RTT measurements and the PRS resource set for CPP measurements. That is, when determining the priority for a PRS resource set for RSTD/multi-RTT measurement, the UE may determine that a PRS resource set that is not instructed to have a priority of a PRS resource pair separately configured for CPP measurement has the lowest priority even if it has a higher priority according to the priority of the PRS resource set instructed by the existing priority rule. In other words, even if CPP measurement and the RSTD/multi-RTT measurement are allowed to be performed on different PRS resources, the PRS resource set for the RSTD/multi-RTT measurement may be selected from among the PRS resource sets in which the priority of the PRS resource pair configured separately for the CPP measurement is indicated.

Alternatively, if the PRS resources for joint reporting need to be the same (i.e., it is not permitted for the PRS resources for measuring/reporting RSTD/multi-RTT and the PRS resources for measuring/reporting RSCPD/RSCP to be different), the UE needs to jointly prioritize the PRS resource sets for measuring/reporting RSTD/multi-RTT and RSCPD/RSCP. That is, it is a joint report, and thus the measurement of RSTD/multi-RTT at the LMF end may be directly used for the integer ambiguity resolution of CPP measurement, and accordingly, it may be assumed that the PRS resource in which CPP is measured and the PRS resource for the existing positioning needs to be the same. In this case, when the UE performs RSTD/multi-RTT measurement/reporting according to the configuration of LMF, the UE may determine the priority of the PRS resource set/PRS resource differently depending on whether the RSTD/multi-RTT measurement/reporting includes a configuration for RSCP/RSCPD measurement/reporting (or whether there is an instruction/request for joint reporting through assistance data).

For example, the UE may be instructed by the LMF to perform both RSTD/multi-RTT and CPP (RSCP/RSCPD) measurements/reporting. In this case, the UE may select/determine a PRS resource/PRS resource pair for RSTD/multi-RTT and CPP (RSCP/RSCPD) measurement/reporting based on the priority of a PRS resource set separately configured for CPP measurement or the priority of a PRS resource pair. Alternatively, a UE may report measurements for only RSTD/multi-RTT in certain cases, even if instructed to report simultaneously RSTD/multi-RTT and CPP (RSCP/RSCPD). In this case, the UE may perform the RSTD/multi-RTT measurement according to the priority for the previous PRS resource set without considering the priority of the PRS resource set separately configured for CPP measurement or the priority of the PRS resource pair. For example, the specific case may be that reporting cycles of RSTD/multi-RTT measurement and CPP measurement are different, the measurement quality of the PRS resource set for CPP measurement does not satisfy a predefined condition/threshold, the reception channel quality (e.g., LOS condition, or doppler) of the PRS resource set for CPP measurement does not satisfy a pre-agreed condition/threshold, or the difference between the previous CPP measurement/reported value and the currently measured CPP measurement value is not greater than a pre-agreed specific threshold.

In other words, when the UE is instructed to perform both RSTD/multi-RTT measurements and CPP (RSCP/RSCPD) measurements, the UE may determine whether to determine the PRS resource set on which to perform measurements based on the priority of the previous PRS resource set based on the possibility of simultaneous measurements/reporting between the RSTD/multi-RTT and CPP, or to determine the PRS resource set/PRS resource pair on which to perform measurements based on the priority of the PRS resource set or PRS resource pair separately configured for CPP.

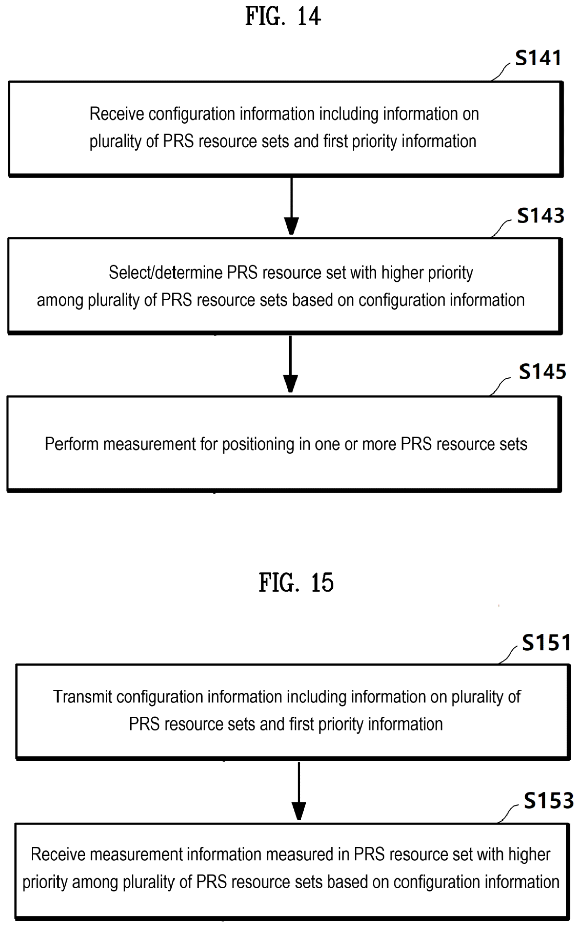

FIG. 14 is a diagram for explaining a method of performing measurement for positioning by a UE.

Hereinafter, at least one method of Methods 1 to 4 of "New interpretation of existing priority configuration of PRS resource set units" described above and/or a method of selecting/determining a PRS resource set/PRS resource in which measurement/reporting for positioning is performed by a UE based on "configuration of new priority for CPP measurement" is described in detail.

Referring to FIG. 14, the UE may receive configuration information including information on a plurality of positioning reference signal (PRS) resource sets and first priority information between the plurality of PRS resource sets from a network (LMF or local server) (S 141). Here, the first priority information is information on the priority between PRS resource sets according to the existing priority rules described above, and may be information on the priority related to measurements such as RSTD and RTT.

The information on the plurality of PRS resource sets may be information indicating a plurality of PRS resource sets for positioning among the PRS resource sets configured through resource configuration information such as RRC signaling. For example, the information on the plurality of PRS resource sets may include information on PRS resource set IDs that indicate a PRS resource set for positioning among the PRS resource sets configured through the resource configuration information. The first priority information may be information that configures a priority for each of the plurality of PRS resource sets. For example, the UE may receive the configuration information in a positioning assistance data transfer procedure. Alternatively, as described above, the UE may receive measurement configuration information from the network that triggers measurement/reporting according to a specific positioning scheme after receiving the configuration information. In this case, the measurement configuration information may include indication information for a PRS resource set related to the specific positioning scheme.

Alternatively, the configuration information may further include information on PRS resource pairs included in at least one PRS resource set for carrier phase based positioning (CPP) measurement and second priority information between the PRS resource pairs. For example, the configuration information may include information on at least one PRS resource set for a positioning scheme based on CPP among positioning schemes, information on PRS resource pairs included in the at least one PRS resource set, and second priority information on priorities between the PRS resource pairs. As described above, the PRS resource pair is a PRS resource pair selected for double differencing in CPP measurement (i.e., for the purpose of simultaneous CPP measurement), and may be two PRS resources for different TRP transmission and reception points.

Then, the UE may select/determine a PRS resource set with a higher priority among a plurality of PRS resource sets based on the configuration information (S143). Alternatively, the UE may select/determine a PRS resource set with a higher priority among a plurality of PRS resource sets based on the configuration information and/or the positioning type/scheme. For example, as described above, the UE may be instructed by a network to measure/report for a specific positioning type (or, the configuration information may include information instructing to measure/report for a specific positioning type/scheme). In this case, the UE may determine a priority among the plurality of PRS resource sets based on the specific positioning type and the configuration information, and select one or more PRS resource sets for measurement of the specific positioning type based on the determined priority.

In detail, when the specific positioning type/the specific positioning scheme is CPP (i.e., when the measurement for the positioning is CPP measurement, or when simultaneous CPP measurement is instructed), the UE may determine/consider that the priority for at least one PRS resource set related to the CPP measurement (e.g., at least one PRS resource set instructed for the measurement of the CPP or at least one PRS resource set in which the PRS resource pairs are configured) is configured to the highest priority, regardless of the first priority information as described above. In this case, the UE may select/determine a PRS resource set for the CPP measurement from the at least one PRS resource set according to the determined/considered priority. In this case, the UE may determine/consider that the highest priority is configured equally for at least one PRS resource set. In this case, the UE may determine that at least one PRS resource set among the plurality of PRS resource sets has the highest priority and determine the at least one PRS resource set as the PRS resource set for the CPP measurement. For example, unlike other positioning types/schemes, the UE may select/determine two or more PRS resource sets as the PRS resource sets for the CPP measurement.

When the specific positioning type/scheme is CPP, the UE may further consider the PRS resource pairs and the second priority information to determine/select a PRS resource for the CPP measurement within the at least one PRS resource set. For example, the UE may determine/select a PRS resource set for measuring the at least one PRS resource set regardless of the first priority information, select a PRS resource pair having the highest priority among PRS resource pairs configured for the at least one PRS resource set based on the second priority information, and perform measurement for double differencing on the selected PRS resource pair. For example, if the specific positioning type/scheme is CPP, the PRS resources for measurement may be (restricted) selected as one of the PRS resource pairs by the configuration information.

Alternatively, the configuration information may further include information on a time window related with the CPP measurement. If the specific positioning type/scheme is CPP, as described above, the UE may reinterpret the priorities for two or more PRS resource sets configured within the time window among the plurality of PRS resource sets. For example, among the priorities of the two or more PRS resource support sets configured by the first priority information, the highest priority may be considered/determined to be configured equally for both of the two or more PRS resource sets. Alternatively, the UE may determine/consider the priority of a PRS resource set that includes PRS resources expected to be received within the time interval among the plurality of PRS resource sets as the highest, regardless of the first priority information.

In contrast, if the measurement for the positioning is not CPP measurement (e.g., an RSTD measurement or an RTT measurement, which are existing positioning schemes), the UE may determine the priorities of the plurality of PRS resource sets based on the first priority, and perform the measurement for the positioning for the PRS resource set having the highest determined priority. That is, the UE may determine/select a PRS resource set on which to perform measurement based on the first priority information, without considering the second priority information and information on the PRS resource pairs.

The UE may perform measurements for positioning in the PRS resource set and/or PRS resources determined/selected as described above, and report measurement information, which is a result of the measurements, to the network. For example, if the measurement is CPP measurement, the UE may report measurement information on a phase difference between the selected PRS resource pair to the network.

FIG. 15 is a diagram for explaining a method of providing configuration information for measurement for positioning to a UE by a network.

Referring to FIG. 15, the network may transmit configuration information including information on a plurality of positioning reference signal (PRS) resource sets and first priority information between the plurality of PRS resource sets to the UE (S151). For example, the network (LMF, location server) may transmit the configuration information to the UE (via the BS) in a positioning assistance data transfer procedure.

The information on the plurality of PRS resource sets may be information indicating a plurality of PRS resource sets for positioning among the PRS resource sets configured through resource configuration information such as RRC signaling. For example, the information on the plurality of PRS resource sets may include information on PRS resource set IDs that indicate a PRS resource set for positioning among the PRS resource sets configured through the resource configuration information. The first priority information may be information that configures a priority for each of the plurality of PRS resource sets.

Alternatively, as described above, the network may transmit measurement configuration information that triggers measurement/reporting according to a specific positioning scheme after transmitting the configuration information. In this case, the measurement configuration information may include indication information for a PRS resource set related to the specific positioning scheme.

Alternatively, the configuration information may further include information on PRS resource pairs included in at least one PRS resource set for CPP measurement and second priority information between the PRS resource pairs. For example, the configuration information may include information on at least one PRS resource set used for a positioning scheme based on CPP among positioning schemes, information on PRS resource pairs included in the at least one PRS resource set, and second priority information on priorities between the PRS resource pairs. As described above, the network may select PRS resource pairs for two PRS resources for different TRP transmission and reception points for double differencing in CPP measurement (i.e., for the purpose of simultaneous CPP measurement), and may include information on the selected PRS resource pairs and second priority information between the selected PRS resource pairs in the configuration information.

Then, the network may receive measurement information for a PRS resource set with a higher priority among a plurality of PRS resource sets from the UE based on the configuration information (S153). For example, the network may expect that measurement information measured from a PRS resource set with a higher priority among a plurality of PRS resource sets may be reported based on the configuration information and the positioning type. For example, as described above, the network may trigger/instruct the UE to measure/report for a specific positioning type. In this case, the network may expect that measurement information measured on a specific PRS resource set or a specific PRS resource pair determined based on the specific positioning type and the configuration information may be reported.

In detail, when the network instructs the UE to perform CPP measurement (e.g., for the purpose of simultaneous CPP measurement), the network may expect that measurement information measured within at least one PRS resource set related to the CPP measurement (e.g., at least one PRS resource set instructed for the measurement of the CPP or at least one PRS resource set in which the PRS resource pairs are configured) may be reported, regardless of the first priority information as described above. For example, the network may expect that measurement information measured from more than one PRS resource set may be reported, unlike other positioning types/schemes.

When the network instructs the UE to perform CPP measurement, the network may expect that measurement information for a PRS resource pair with a high priority may be reported according to the PRS resource pairs instructed through the configuration information and the second priority information. For example, the network may report measurement information for a PRS resource pair having the highest priority among the PRS resource pairs configured for the at least one PRS resource set based on the second priority information (e.g., a PRS resource pair having the highest priority among at least one PRS resource pair that satisfies a measurement condition among the PRS resource pairs). Here, the PRS resource pair is two PRS resources for measurement for double differencing as described above, and the measurement information may include information on the phase difference between the two PRS resources.

Alternatively, the configuration information may further include information on a time window related with the CPP measurement. If the specific positioning type/the specific positioning scheme is CPP, as described above, the network may expect that measurement information measured for two or more PRS resource sets configured within the time window among the plurality of PRS resource sets may be reported.

In contrast, if the measurement for the positioning is not CPP measurement (e.g., an RSTD measurement or an RTT measurement, which are existing positioning schemes), the network may expect that measurement information measured in a high-priority PRS resource set based on the first priority may be reported.

As such, the proposed disclosure may effectively ensure that simultaneous measurement for differencing (CPP measurement) is performed on two or more PRS resource sets by reinterpreting previous priorities among PRS resource sets for CPP measurement or configuring separate priorities for the CPP measurement. Alternatively, the proposed disclosure may significantly improve the accuracy of CPP-based positioning by additionally configuring PRS resource pairs and priorities between the PRS resource pairs.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

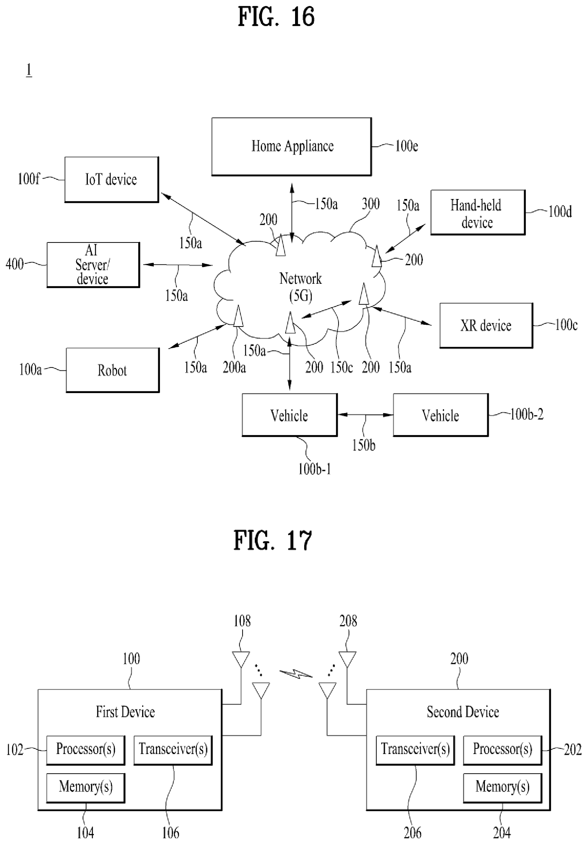

FIG. 16 illustrates a communication system applied to the present disclosure.

Referring to FIG. 16, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/DL communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

**Examples of wireless devices to which the present disclosure is applied**

FIG. 17 illustrates a wireless device applicable to the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to an example, the first wireless device 100 or UE may include the processor 102 and the memory 104 connected to the transceiver 106. The memory 104 may include at least one program for performing operations related to at least one of Methods 1 to 4 of "1. New interpretation of existing priority configuration of PRS resource set unit" described above, and/or the embodiments described in "2. New priority configuration for CPP measurement."

In detail, the processor 102 may control the RF transceiver 106 to receive configuration information including first priority information between a plurality of PRS resource sets, and perform measurement for positioning in a PRS resource set having a higher priority among the plurality of PRS resource sets based on the configuration information. Here, the configuration information may further include information on PRS resource pairs included in at least one PRS resource set for carrier phase based positioning (CPP) measurement and second priority information between the PRS resource pairs.

Alternatively, the first wireless device 100 or UE may be a processing device including the processor 102 and the memory 104. The processing device may include at least one processor 102 and at least one memory connected to the at least one processor 102 and storing instructions, wherein the instructions, based on being executed by the at least one processor, cause the UE to receive configuration information including information on a plurality of positioning reference signal (PRS) resource sets and first priority information between the plurality of PRS resource sets, and perform measurements for positioning in a PRS resource set having a higher priority among the plurality of PRS resource sets based on the configuration information. Here, the configuration information may further include information on PRS resource pairs included in at least one PRS resource set for carrier phase based positioning (CPP) measurement and second priority information between the PRS resource pairs.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

According to an example, the second wireless device 200 or network may include the processor 202 and a memory 204 connected to the transceiver 206. The memory 204 may include at least one program for performing operations related to at least one of Methods 1 to 4 of "1. New interpretation of existing priority configuration of PRS resource set unit" described above, and/or the embodiments described in "2. New priority configuration for CPP measurement."

In detail, the processor 202 may control the transceiver 206 to transmit configuration information including information on a plurality of positioning reference signal (PRS) resource sets and first priority information between the plurality of PRS resource sets, and may receive measurement information on measurement performed on a predetermined PRS resource set among the plurality of PRS resource sets based on the configuration information. Here, the configuration information may further include information on PRS resource pairs included in at least one PRS resource set for CPP measurement and second priority information between the PRS resource pairs.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of application of wireless devices to which the present disclosure is applied

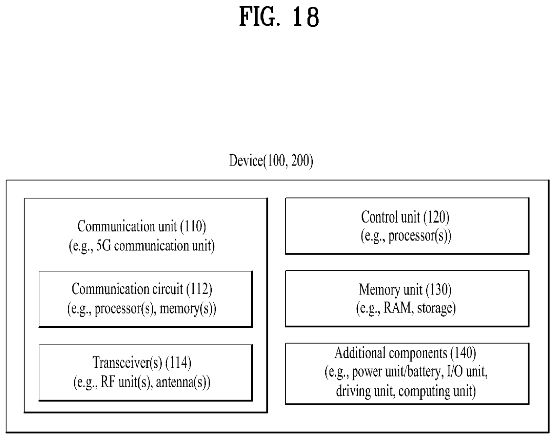

FIG. 18 illustrates another example of a wireless device applied to the present disclosure.

Referring to FIG. 18, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology may generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

**Industrial Applicability**

The above-described embodiments of the present disclosure are applicable to various mobile communication systems.

**Claims**

1. A method of performing measurement by a user equipment (UE) in a wireless communication system, the method comprising:

    receiving configuration information including information on a plurality of positioning reference signal (PRS) resource sets and first priority information between the plurality of PRS resource sets; and
    performing measurement for positioning in a PRS resource set having a higher priority among the plurality of PRS resource sets based on the configuration information,
    wherein the configuration information further includes information on PRS resource pairs included in at least one PRS resource set for carrier phase based positioning (CPP) measurement and second priority information between the PRS resource pairs.

2. The method of claim 1, wherein, based on the measurement for the positioning being CPP measurement, the UE determines that a highest priority is configured for the at least one PRS resource set among the plurality of PRS

28

resource sets, regardless of the first priority information.

3. The method of claim 1, wherein, based on the measurement for the positioning being CPP measurement, the UE determines that the same specific priority is configured for the at least one PRS resource set regardless of the first priority information.

4. The method of claim 1, wherein the configuration information further includes information on a time window related to CPP measurement.

5. The method of claim 4, wherein, based on the measurement for the positioning being CPP measurement, the UE considers that a highest priority is configured for PRS resource sets in which the PRS is received within the time window among the plurality of PRS resource sets.

6. The method of claim 1, wherein, based on the measurement for the positioning being CPP measurement, the CPP measurement is performed only for one PRS resource pair among the plurality of PRS resource pairs determined based on the second priority information.

7. The method of claim 1, further comprising reporting measurement information on a result of performing the measurement,
wherein, based on measurement for the positioning being CPP measurement, the measurement information includes information on a phase difference between PRSs received from the one PRS resource pair.

8. The method of claim 1, wherein each of the plurality of PRS resource pairs includes two PRS resources related with different transmission and reception points (TRPs).

9. The method of claim 1, wherein, based on the measurement for the positioning being not CPP measurement, the measurement is performed in the PRS resource set having a highest priority among the plurality of PRS resource sets based on the first priority information.

10. The method of claim 1, wherein the configuration information is transmitted to a network through a positioning assistance data transfer procedure.

11. A computer-readable recording medium recording a program for performing the method of claim 1.

12. A user equipment (UE) for performing measurement in a wireless communication system, the UE comprising:

a radio frequency (RF) transceiver; and
a processor connected to the RF transceiver,
wherein the processor controls the RF transceiver to receive configuration information including information on a plurality of positioning reference signal (PRS) resource sets and first priority information between the plurality of PRS resource sets, and performs measurement for positioning in a PRS resource set having a higher priority among the plurality of PRS resource sets based on the configuration information, and
the configuration information further includes information on PRS resource pairs included in at least one PRS resource set for carrier phase based positioning (CPP) measurement and second priority information between the PRS resource pairs.

13. A processing device for controlling a user equipment (UE) for performing measurement in a wireless communication system, the processing device comprising:

at least one processor; and
at least one memory connected to the at least one processor and storing instructions that, based on being executed by the at least one processor, cause the UE to receive configuration information including information on a plurality of positioning reference signal (PRS) resource sets and first priority information between the plurality of PRS resource sets, and perform measurement for positioning in a PRS resource set having a higher priority among the plurality of PRS resource sets based on the configuration information,
wherein the configuration information further includes information on PRS resource pairs included in at least one PRS resource set for carrier phase based positioning (CPP) measurement and second priority information between the PRS resource pairs.

14. A method of transmitting configuration information for carrier phase based positioning (CPP) measurement by a network in a wireless communication system, the method comprising:

   transmitting configuration information including information on a plurality of positioning reference signal (PRS) resource sets and first priority information between the plurality of PRS resource sets; and
   receiving measurement information for measurement performed on a predetermined PRS resource set among the plurality of PRS resource sets based on the configuration information,
   wherein the configuration information further includes information on PRS resource pairs included in at least one PRS resource set for CPP measurement and second priority information between the PRS resource pairs.

15. A network for transmitting configuration information for carrier phase based positioning (CPP) measurement in a wireless communication system, the network comprising:

   a radio frequency (RF) transceiver; and
   a processor connected to the RF transceiver,
   wherein the processor controls the RF transceiver to transmit configuration information including information on a plurality of positioning reference signal (PRS) resource sets and first priority information between the plurality of PRS resource sets, and receive measurement information on measurement perform for a predetermined PRS resource set among the plurality of PRS resource sets based on the configuration information, and
   the configuration information further includes information on PRS resource pairs included in at least one PRS resource set for CPP measurement and second priority information between the PRS resource pairs.

# FIG. 1

# FIG. 2

# FIG. 3

···  | One Frame (10ms) |  ···

···  | Half-Frame (5ms) | | Half-Frame (5ms) |  ···

···  | Subframe 0 (1ms) | ··· | Subframe 4 (1ms) | Subframe 5 (1ms) | ··· | Subframe 9 (1ms) |  ···

Subframe (1ms)

15KHz | Slot 0 (14symbols) |

1ms

30KHz | Slot 0 (14symbols) | Slot 1 |

500us

60KHz | Slot 0 (14symbols) | Slot 1 | Slot 2 | Slot 3 |

250us

120KHz | Slot 0 (14symbols) | Slot 1 | Slot 2 | Slot 3 | Slot 4 | Slot 5 | Slot 6 | Slot 7 |

125us

# FIG. 4

Resource grid

A carrier
( up to 3300 subcarriers, i.e., 275 RBs )

A BWP

1 RB = 12 subcarriers

1 RE

1 subcarrier

1 symbol

k = 0

l = 0 · · ·

# FIG. 5

Initial Cell Search — System Information Reception — Random Access Procedure — General DL/UL Tx/Rx S18

| P/S - SCH & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11 — S12 — S13 — S14 — S15 — S16 — S17

· DL/UL ACK/NACK
· UE CQI/PMI/Rank Report using PUSCH and PUCCH

# FIG. 6

UE — BS

SRS Config. IE
(usage=BM, SRS-SpatialRelation Info) — S1010

Determination of TX beam
for SRS resources — S1020

Transmit SRS through a determined Tx beam — S1030

feedback — S1040

# FIG. 7

## FIG. 8

# FIG. 9

EP 4 761 397 A1

**FIG. 10**

| UE | NG RAN | | AMF | | LMF |
|---|---|---|---|---|---|
| LPP | | | | Relay | LPP |
| NAS | | | NAS | Relay | |
| RRC | RRC | Relay NGAP | NGAP | HTTP/2 | HTTP/2 |
| PDCP | PDCP | SCTP | SCTP | TLS | TLS |
| RLC | RLC | IP | TCP / IP | TCP | TCP |
| MAC | MAC | L2 | IP | IP | IP |
| L1 | L1 | L1 | L2 | L2 | L2 |
| | | | L1 | L1 | L1 |

NR-Uu / LTE-Uu    NG-C    NLs

## FIG. 11

# FIG. 12

FIG. 13

(1) gNB mono-static

(2) gNB bi-static

(3) gNB-to-UE bi-static

(4) UE mono-static

(5) UE bi-static

(6) UE-to-gNB bi-static

EP 4 761 397 A1

# FIG. 14

S141

Receive configuration information including information on plurality of PRS resource sets and first priority information

S143

Select/determine PRS resource set with higher priority among plurality of PRS resource sets based on configuration information

S145

Perform measurement for positioning in one or more PRS resource sets

# FIG. 15

S151

Transmit configuration information including information on plurality of PRS resource sets and first priority information

S153

Receive measurement information measured in PRS resource set with higher priority among plurality of PRS resource sets based on configuration information

## FIG. 16

## FIG. 17

FIG. 18

Device(100, 200)

| | |
|---|---|
| **Communication unit (110)**<br>(e.g., 5G communication unit)<br><br>Communication circuit (112)<br>(e.g., processor(s), memory(s))<br><br>Transceiver(s) (114)<br>(e.g., RF unit(s), antenna(s)) | Control unit (120)<br>(e.g., processor(s))<br><br>Memory unit (130)<br>(e.g., RAM, storage)<br><br>Additional components (140)<br>(e.g., power unit/battery, I/O unit,<br>driving unit, computing unit) |

# INTERNATIONAL SEARCH REPORT

| | International application No. |
|---|---|
| | **PCT/KR2024/011987** |

## A. CLASSIFICATION OF SUBJECT MATTER

**H04W 64/00**(2009.01)i; **H04W 24/08**(2009.01)i; **H04L 5/00**(2006.01)i; **G01S 5/00**(2006.01)i; **H04W 4/029**(2018.01)i

According to International Patent Classification (IPC) or to both national classification and IPC

## B. FIELDS SEARCHED

Minimum documentation searched (classification system followed by classification symbols)

H04W 64/00(2009.01); G01S 5/10(2006.01); H04L 5/00(2006.01); H04W 72/0446(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포지셔닝 참조 신호(PRS), 캐리어 위상 기반 포지셔닝(carrier phase based positioning: CPP), 우선순위(priority), 측정(measurement)

## C. DOCUMENTS CONSIDERED TO BE RELEVANT

| Category* | Citation of document, with indication, where appropriate, of the relevant passages | Relevant to claim No. |
|---|---|---|
| Y | WO 2022-162241 A1 (TELEFONAKTIEBOLAGET LM ERICSSON (PUBL)) 04 August 2022 (2022-08-04)<br>See paragraphs [0013], [0036], [0040], [0056], [0125] and [0137]; and claim 1. | 1-3,6-15 |
| A | | 4-5 |
| Y | MODERATOR (CATT). FL Summary #2 for NR DL and UL carrier phase positioning. R1-2303889, 3GPP TSG RAN WG1 Meeting #112bis-e, e-meeting. 22 April 2023.<br>See pages 46, 48 and 58-59. | 1-3,6-15 |
| A | LOCAILA, INC. Discussion on NR DL and UL carrier phase positioning. R1-2304970, 3GPP TSG RAN WG1 Meeting #113. Incheon, Korea. 15 May 2023.<br>See sections 1-4. | 1-15 |
| A | US 2023-0171750 A1 (ELECTRONICS AND TELECOMMUNICATIONS RESEARCH INSTITUTE) 01 June 2023 (2023-06-01)<br>See paragraphs [0054]-[0056] and [0172]; and figure 1. | 1-15 |

[✓] Further documents are listed in the continuation of Box C.     [✓] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 December 2024** | **03 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/011987**

| C. | DOCUMENTS CONSIDERED TO BE RELEVANT | |
|---|---|---|
| Category* | Citation of document, with indication, where appropriate, of the relevant passages | Relevant to claim No. |
| A | US 2023-0076490 A1 (QUALCOMM INCORPORATED) 09 March 2023 (2023-03-09)<br>See claim 1. | 1-15 |

Form PCT/ISA/210 (second sheet) (July 2022)

**INTERNATIONAL SEARCH REPORT**
Information on patent family members

International application No.

**PCT/KR2024/011987**

| Patent document cited in search report | | | Publication date (day/month/year) | Patent family member(s) | | | Publication date (day/month/year) |
|---|---|---|---|---|---|---|---|
| WO | 2022-162241 | A1 | 04 August 2022 | CN | 117083936 | A | 17 November 2023 |
| | | | | CN | 117858254 | A | 09 April 2024 |
| | | | | EP | 4285660 | A1 | 06 December 2023 |
| | | | | US | 2024-0106594 | A1 | 28 March 2024 |
| US | 2023-0171750 | A1 | 01 June 2023 | KR | 10-2023-0080316 | A | 07 June 2023 |
| US | 2023-0076490 | A1 | 09 March 2023 | CN | 117916613 | A | 19 April 2024 |
| | | | | EP | 4392799 | A1 | 03 July 2024 |
| | | | | KR | 10-2024-0046510 | A | 09 April 2024 |
| | | | | US | 11573286 | B1 | 07 February 2023 |
| | | | | WO | 2023-028395 | A1 | 02 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LEE** ; **HONGKYU**. An Instantaneous Integer Ambiguity Resolution for GPS Real-Time Structure Monitoring. *Journal of Korean Society of Civil Engineers*, 2014, vol. 34 (1), 342-353